# EUROPEAN PATENT SPECIFICATION

(11) **EP 2 410 707 B1**
(45) Date of publication and mention of the grant of the patent: **21.03.2018**
(21) Application number: 09837329.3
(22) Date of filing: 21.10.2009
(51) Int. Cl.: H04L 27/26, H04L 1/06, H04B 7/155, H04L 1/00

(54) **ORTHOGONAL NETWORK SPACE-TIME CODING METHOD AND RELAY TRANSMISSION SYSTEM**
RAUM-ZEIT-CODIERUNGSVERFAHREN IN EINEM ORTHOGONALEN NETZ UND RELAISÜBERTRAGUNGSSYSTEM
PROCÉDÉ DE CODAGE D'ESPACE TEMPS DANS UN RÉSEAU ORTHOGONAL ET SYSTÈME DE TRANSMISSION DE RELAIS

(30) Priority: 07.01.2009 CN 200910076107
(43) Date of publication of application: 25.01.2012
(73) Proprietor: ZTE Corporation, Shenzhen, Guangdong 518057 (CN)
(72) Inventor: JIANG, Jing, Guangdong 518057 (CN); SUN, Yunfeng, Guangdong 518057 (CN); TIAN, Kaibo, Guangdong 518057 (CN); LI, Feng, Guangdong 518057 (CN)
(74) Representative: Novagraaf Technologies
(86) International application number: PCT/CN2009/074552
(87) International publication number: WO 2010/078772

(56) References cited:
- EP-A2- 1 883 178
- CN-A- 101 242 241
- CN-A- 101 309 127
- CN-A- 101 316 155
- CN-A- 101 321 144
- BARBAROSSA S ET AL: "Distributed space-time coding strategies for wideband multihop networks:regenerative vs. non-regenerative relays", ACOUSTICS, SPEECH, AND SIGNAL PROCESSING, 2004. PROCEEDINGS. (ICASSP ' 04). IEEE INTERNATIONAL CONFERENCE ON MONTREAL, QUEBEC, CANADA 17-21 MAY 2004, PISCATAWAY, NJ, USA,IEEE, PISCATAWAY, NJ, USA, vol. 4, 17 May 2004 (2004-05-17), pages 501-504, XP010718515, DOI: 10.1109/ICASSP.2004.1326873 ISBN: 978-0-7803-8484-2
- HEDAYAT A ET AL: "Cooperative communication in wireless networks", IEEE COMMUNICATIONS MAGAZINE, IEEE SERVICE CENTER, PISCATAWAY, US, vol. 42, no. 10, 1 October 2004 (2004-10-01), pages 74-80, XP011120045, ISSN: 0163-6804, DOI: 10.1109/MCOM.2004.1341264

## Description

### Field of the Invention

The present invention relates to the encoding technology in the wireless communication network, in particular to an orthogonal or a distributed orthogonal network space-time coding method and a relay transmission system based on the method.

### Background of the Invention

The next generation wireless mobile communication will provide more high-rate multimedia services and data services. However, multi-path fading in a mobile channel is one of main bottlenecks affecting communication quality and transmission rate. In recent years, it is one of the hot topics of research to utilize the relay technology to provide extra diversity gains for the users of the mobile communication so as to eliminate the impacts of the multi-path fading. In a large-scale wireless relay communication network, a plurality of source nodes and a plurality of relay nodes are usually included. In the traditional relay schemes (such as single antenna relay and MIMO relay), it is necessary to forward data for each source node separately, which results in that the transmission efficiency decreases greatly as the network scale increases.

By means of performing certain linear or non-linear processing (encoding) on data information received in multiple input links, network coding can improve network throughput, reduce the number of transmissions of data packets, enhance the fault-tolerance property and robustness of networks, and thereby has a favorable application prospect in the wireless relay communication network.

Along with the increase of the number of information sources in a network, when applied to the wireless communication network, the traditional network coding which employs a cooperative manner can only obtain a throughput of 1/(N+1) symbols/second/user. In order to solve the above problem, it is proposed to adopt a method for network coding in a complex domain, which works on symbol level of a physical layer. This method can obtain a throughput of 1/2 symbols/user/symbol period, and is more suitable for the wireless field.

However, the above method only considers the case that there is one antenna in a relay, without considering the case that there are plural antennas in a relay or there are plural relay nodes. However, a multi-input multi-output wireless communication system can make comprehensive use of the three-dimensional resources of space, time and frequency, and possesses a broad application prospect in the future mobile communication system. Document by Barbarossa S. et al., "Distributed space-time coding strategies for wide band multihop networks: regenerative vs. non-regenerative relays", PROCEEDINGS OF IEEE INTERNATIONAL CONFERENCE ACOUSTICS, SPEECH, AND SIGNAL PROCESSING, Montreal, Quebec, Canada 17-21 May 2004, vol. 4, pages 501-504, discloses a distributed space-time coding strategies for wide band multihop networks.

Document by Hedayat A. et al., "Cooperative communication in wireless networks", IEEE COMMUNICATIONS MAGAZINE, vol. 42, n. 10, 1 October 2004, pages 74-80, presents an overview of the developments in the field of cooperative communication.

### Summary of the Invention

In view of the above mentioned issues, the present invention provides an orthogonal network space-time coding method according to claim 1 and an orthogonal network space-time coding relay transmission system according to claim 7, to solve the technical problem of low network throughput of relay node(s) and large diversity loss in the wireless communication network including a target node, a source node and a relay node(s).

In particular an embodiment of the present invention is implemented as follows:
an orthogonal network space-time coding method comprising the steps of:
   Step A, the source node broadcasting data information to the relay node and the target node, which requires *T_{SR}* symbol periods; and
   Step B, the relay node performing orthogonal network space-time coding, and transmitting the encoded data to the target node, with step B requiring 2 symbol periods.

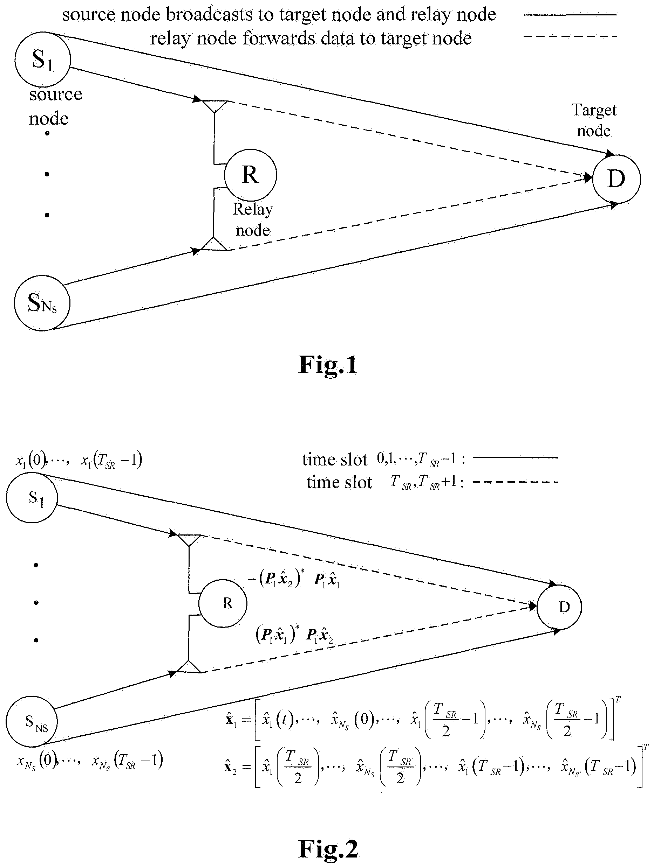

Step A is a stage of the source node broadcasting data information. As the real line in Fig. 1 shows, in the stage, Ns source nodes simultaneously broadcast data information to a relay node R and a target node D. The signals received by the relay node R and the target node D in the t-th symbol period are respectively denoted as ***y**_{SR}*(*t*) and ***y**_{SD}*(*t*). The stage needs *T_{SR}* symbol periods.

Step B is a stage of relay node performing orthogonal network space-time coding and transmission. As the dashed line shows in Fig. 1, five processes comprising relay node decoding, estimation information grouping, estimation information compression, compressed data space-time coding and space time transmission are need to be accomplished in this stage,. The five procedures are described as follows in conjunction with Fig. 2.

The process of relay node decoding is: the relay node R performs maximum likelihood decoding according to the received signal ***y**_{SR}*(*t*), to obtain estimation information **x̂**(*t*) of signal vectors ***x***(*t*) transmitted by Ns source nodes: $\hat{x} \left(t\right) = {argmin}_{x \left(t\right)} {‖ {y}_{SR} \left(t\right) - {H}_{SR} x \left(t\right) ‖}^{2}$ wherein, ***x̂***(*t*)=[x̂₁(*t*) ··· *x̂_{N_{S}}*(*t*)]*^{T}*, t = 0,1,2,···,T_{SR} -1, and ${H}_{SR} = \left[\begin{matrix}{h}_{{S}_{1} R} & , ⋯ , & {h}_{{S}_{{N}_{S}} R}\end{matrix}\right]$ is channel fading matrixes between the Ns source nodes and the relay node R.

The process of estimation information grouping is: the relay node R divides the estimation information of the signal vectors transmitted by all the Ns source nodes from the 0^{th} symbol period to the *T_{SR}* -1th symbol period, into two $\frac{{T}_{SR} {N}_{S}}{2} \times 1$ -dimensional column vectors, wherein the first vector ***x̂***₁ comprises estimation information, which is estimated by the relay node, of the signal vectors transmitted by the Ns source nodes from the 0^{th} symbol period to the $\frac{{T}_{SR}}{2} - 1 th$ symbol period, viz. ${\hat{x}}_{1} = {\left[\begin{matrix}{\hat{x}}^{T} \left(0\right) & {\hat{x}}^{T} \left(1\right) & ⋯ & {\hat{x}}^{T} \left(\frac{{T}_{SR}}{2} - 1\right)\end{matrix}\right]}^{T} ;$ and the second vector ***x̂***₂ comprises estimation information, which is estimated by the relay node, of the signal vectors transmitted by the Ns source nodes from the $\frac{{T}_{SR}}{2} th$ symbol period to the *T_{SR}* -1 th symbol period, viz. ${\hat{x}}_{2} = {\left[\begin{matrix}{\hat{x}}^{T} \left(\frac{{T}_{SR}}{2}\right) & {\hat{x}}^{T} \left(\frac{{T}_{SR}}{2} + 1\right) & ⋯ & {\hat{x}}^{T} \left({T}_{SR} - 1\right)\end{matrix}\right]}^{T} .$

The process of estimation information compression is: the $\frac{{T}_{SR} {N}_{S}}{2} \times 1$ -dimensional column vector ***x̂***₁ which is obtained during the process of estimation information grouping is compressed into a complex signal, viz. the $1 \times \frac{{T}_{SR} {N}_{S}}{2}$ -dimensional unit complex row vector **P***ⱼ* is left multiplied by the column vector ***x̂***₁ to obtain *x*_{*R*₁}, wherein **P***ⱼ* is a network encoding weight value, which serves to compress $\frac{{T}_{SR} {N}_{S}}{2} \times 1$ -dimensional column vector ***x̂***₁ into a complex signal to enhance the throughput of network encoding; and the $\frac{{T}_{SR} {N}_{S}}{2} \times 1$ -dimensional column vector ***x̂***₂ which is obtained during the process of estimation information grouping is compressed into a complex signal, viz. the $1 \times \frac{{T}_{SR} {N}_{S}}{2}$ -dimensional unit complex row vector **P***ⱼ* is left multiplied by the column vector ***x̂***₂ to obtain *x*_{*R*₂}.

The process of compressed data space-time coding is: the signals *x*_{*R*₁} and x_{*R*₂} obtained during the process of estimation information compression form a 2×2 matrix, wherein the element in the first row and the first column of the 2×2 matrix is *x*_{*R*₁}, the element in the first row and the second column of the 2×2 matrix is *x*_{*R*₂}, the element in the second row and the first column of the 2×2 matrix is the negative conjugation of *x*_{*R*₂}, viz. $- {x}_{{R}_{2}}^{*} ,$ and the element in the second row and the second column of the 2×2 matrix is the conjugation of *x*_{*R*₁}, viz. ${x}_{{R}_{1}}^{*} .$ The 2×2 matrix is shown as follows: $\left[\begin{matrix}{x}_{{R}_{1}} & {x}_{{R}_{2}} \\ - {x}_{{R}_{2}}^{*} & {x}_{{R}_{1}}^{*}\end{matrix}\right] = \left[\begin{matrix}{P}_{j} {\hat{x}}_{1} & {P}_{j} {\hat{x}}_{2} \\ - {\left({P}_{j} {\hat{x}}_{2}\right)}^{*} & {\left({P}_{j} {\hat{x}}_{1}\right)}^{*}\end{matrix}\right] .$

The process of space time transmission is: the 2×2 matrix is transmitted respectively by two antennas of the relay node within two symbol periods, wherein two signals in the first row of the 2×2 matrix are transmitted to the target node by the two antennas of the relay node in the *T_{SR}*th symbol period, viz. the first antenna transmits the signal *x*_{*R*₁} in the *T_{SR}* th symbol period, and the second antenna transmits the signal *x*_{*R*₂} in the *T*_{SR} th symbol period; and two signals in the second row of the 2×2 matrix are transmitted to the target node by the two antennas of the relay node in the *T_{SR}* +1th symbol period, viz. the first antenna transmits the signal $- {x}_{{R}_{2}}^{*}$ in the *T_{SR}* +1th symbol period, and the second antenna transmits the signal ${x}_{{R}_{1}}^{*}$ in the *T_{SR}* +1th symbol period.

Another object of the present invention is to provide an orthogonal network space-time coding relay transmission system based on an orthogonal network space-time coding method. In order to achieve the object, the technical solution of the present invention is implemented as follows:
an orthogonal network space-time coding relay transmission system comprising a target node, a source node and a relay node, characterized in that:
   the source node is used for broadcasting data information to the relay node and the target node in *T_{SR}* symbol periods; and
   the relay node is used for performing orthogonal network space-time coding on the received data information, and transmitting the encoded data to the target node, wherein the relay node accomplishes five procedures within 2 symbol periods, viz. the process of relay node decoding, the process of estimation information grouping, the process of estimation information compression, the process of compressed data space-time coding and the process of space time transmission.

The processing steps of the orthogonal network space-time coding relay transmission system are identical to the steps of the orthogonal network space-time coding method.

As in the present invention, the estimation signals of the relay node in *T_{SR}* symbol periods are divided into two groups for network space-time coding, and are transmitted in two symbol periods, the throughput can reach *T_{SR}*/(*T_{SR}* + 2) symbols/user/symbol period, and the throughput increases with the increase of *T_{SR},* which cannot be achieved by the traditional relay cooperative communication.

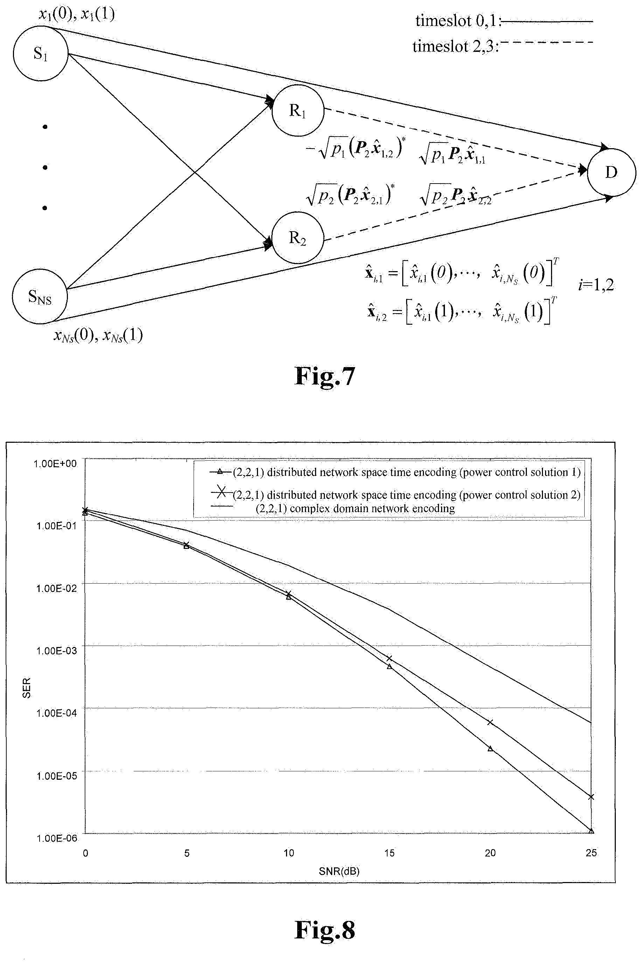

The wireless communication network shown in Fig. 7 comprises one target node, a plurality of source nodes, each having one antenna, and two relay nodes each having only one antenna, which forms a distributed relay network. In a distributed relay network, it is necessary to control the power of each relay node. Another object of the present invention is to provide a distributed orthogonal network space-time coding method. In order to achieve the object, the technical solution of the present invention is implemented as follows:
step A, the source nodes broadcast data information to the relay nodes and the target node, wherein the step needs *T_{S}* symbol periods; and
step B, the relay nodes R1 and R2 perform distributed orthogonal network space-time coding, and transmit the encoded data to the target node, wherein the step needs 2 symbol periods.

Step A is a stage of source nodes broadcasting data information, in which Ns source nodes simultaneously broadcast data information to the relay nodes R₁, R₂ and the target node D, wherein the signal vector transmitted by the Ns source nodes is denoted as **x**(*t*)=[*x*₁(*t*) ··· *x_{N_{S}}*(*t*)]*^{T}*, the signals received by the relay nodes R₁ and R₂ in the t-th symbol period are respectively denoted as ***y***_{*SR*₁}(*t*) and ***y***_{*SR*₂}(*t*), the signal received by the target node D in the t-th symbol period is denoted as ***y**_{SD}*(*t*). This stage needs *T_{S}* symbol periods.

Step B is a stage of the relay node R₁ and the relay node R₂ performing distributed orthogonal network space-time coding and transmission, in which five procedures need to be accomplished, viz. relay node decoding, estimation information grouping, estimation information compression, relay node power control, and compressed data distributed space-time coding and transmission.

In the distributed orthogonal network space-time coding method, the process of relay node decoding is that the relay nodes R₁ and R₂ perform maximum likelihood decoding according to the received signals ***y***_{*SR*₁}(*t*) and ***y***_{*SR*₂}(*t*), wherein the estimation information of signal vector which is transmitted by the Ns source nodes and obtained by the relay node R₁ decoding is denoted as ***x̂***₁(*t*)=[*x̂*_{1,1}(*t*) ··· *x̂_{1,N_{S}}*(*t*)]*^{T}*, the estimation information of signal vector which is transmitted by the Ns source nodes and obtained by the relay node R₂ decoding is denoted as **x̂**₂(*t*)=[*x̂*_{2,1}(*t*) ··· ***x̂****_{2,N_{S}}*(*t*)]*^{T}*, the estimation information ***x̂***₁(*t*) and ***x̂****₂*(*t*) is calculated according to the following formula: ${\hat{x}}_{1} \left(t\right) = {argmin}_{x \left(t\right)} {‖ {y}_{S {R}_{1}} \left(t\right) - {H}_{S {R}_{1}} x \left(t\right) ‖}^{2}$ ${\hat{x}}_{2} \left(t\right) = {argmin}_{x \left(t\right)} {‖ {y}_{S {R}_{2}} \left(t\right) - {H}_{S {R}_{2}} x \left(t\right) ‖}^{2}$ wherein ${H}_{S {R}_{1}} = \left[\begin{matrix}{h}_{{S}_{1} {R}_{1}} & , ⋯ , & {h}_{{S}_{{N}_{S}} {R}_{1}}\end{matrix}\right]$ is a channel fading matrix between the Ns source nodes and the relay node R₁, and ${H}_{S {R}_{2}} = \left[\begin{matrix}{h}_{{S}_{1} {R}_{2}} & , ⋯ , & {h}_{{S}_{{N}_{S}} {R}_{2}}\end{matrix}\right]$ is a channel fading matrix between the Ns source nodes and the relay node R₂.

In the distributed orthogonal network space-time coding method, the process of estimation information grouping is that the relay nodes R₁ and R₂ group the estimation information ***x̂***₁(*t*) and **x̂**₂(*t*) of signal vectors which are transmitted by the Ns source nodes and obtained by the relay nodes R₁ and R₂ decoding, respectively, to obtain two $\frac{{T}_{S} {N}_{S}}{2} \times 1 = 2 {N}_{S} \times 1$ -dimensional column vectors.

The relay node R₁ divides the estimation signals ***x̂***₁(0),···,***x̂***₁(*Tₛ*-1) in *T_{S}* Symbol periods into two parts: ${\hat{x}}_{1,1} = {\left[{\hat{x}}_{1}^{T} \left(0\right) , ⋯ , {\hat{x}}_{1}^{T} \left(\frac{{T}_{s}}{2} - 1\right)\right]}^{T} = {\left[{\hat{x}}_{1,1} \left(0\right) , ⋯ , {\hat{x}}_{1, {N}_{S}} \left(0\right) , ⋯ , {\hat{x}}_{1,1} \left(\frac{{T}_{s}}{2} - 1\right) , ⋯ , {\hat{x}}_{1, {N}_{S}} \left(\frac{{T}_{s}}{2} - 1\right)\right]}^{T} ;$ ${\hat{x}}_{1,2} = {\left[{\hat{x}}_{1}^{T} \left(\frac{{T}_{s}}{2}\right) , ⋯ , {\hat{x}}_{1}^{T} \left({T}_{s} - 1\right)\right]}^{T} = {\left[{\hat{x}}_{1,1} \left(\frac{{T}_{s}}{2}\right) , ⋯ , {\hat{x}}_{1, {N}_{S}} \left(\frac{{T}_{s}}{2}\right) , ⋯ , {\hat{x}}_{1,1} \left({T}_{s} - 1\right) , ⋯ , {\hat{x}}_{1, {N}_{S}} \left({T}_{s} - 1\right)\right]}^{T} .$

The relay node R₂ divides the estimation signals ***x̂***₂(*t*),···,***x̂***₂(*t*+T*ₛ*-1) in *T_{S}* symbol periods into two parts: ${\hat{x}}_{2,1} = {\left[{\hat{x}}_{2}^{T} \left(0\right) , ⋯ , {\hat{x}}_{2}^{T} \left(\frac{{T}_{s}}{2} - 1\right)\right]}^{T} = {\left[{\hat{x}}_{2,1} \left(0\right) , ⋯ , {\hat{x}}_{2, {N}_{S}} \left(0\right) , ⋯ , {\hat{x}}_{2,1} \left(\frac{{T}_{s}}{2} - 1\right) , ⋯ , {\hat{x}}_{2, {N}_{S}} \left(\frac{{T}_{s}}{2} - 1\right)\right]}^{T} ;$ ${\hat{x}}_{2,2} = {\left[{\hat{x}}_{2}^{T} \left(\frac{{T}_{s}}{2}\right) , ⋯ , {\hat{x}}_{2}^{T} \left({T}_{s} - 1\right)\right]}^{T} = {\left[{\hat{x}}_{2,1} \left(\frac{{T}_{s}}{2}\right) , ⋯ , {\hat{x}}_{2, {N}_{S}} \left(\frac{{T}_{s}}{2}\right) , ⋯ , {\hat{x}}_{2,1} \left({T}_{s} - 1\right) , ⋯ , {\hat{x}}_{2, {N}_{S}} \left({T}_{s} - 1\right)\right]}^{T} .$

In the distributed orthogonal network space-time coding method, the process of estimation information compression is that the relay nodes R₁ and R₂ respectively compress the four $\frac{{T}_{S} {N}_{S}}{2} \times 1 = 2 {N}_{S} \times 1$ -dimensional column vectors ***x̂***_{1,1}, ***x̂***_{1,2}, ***x̂***_{2,1}, and ***x̂***_{2,2}, using $1 \times \frac{{T}_{S} {N}_{S}}{2} = 1 \times 2 {N}_{S}$ -dimensional unit complex row vector **P***ᵢ,* viz. the relay node R₁ left multiplies the $1 \times \frac{{T}_{S} {N}_{S}}{2} = 1 \times 2 {N}_{S} - dimensional$ -dimensional unit complex row vector **P***ᵢ* by the column vectors ***x̂***_{1,1} and ***x̂***_{1,2} respectively, to obtain **x**_{*R*1}(0)=**P***ᵢ****x̂***_{1,1} and **x**_{*R*₁}(1)=**P***ᵢ****x̂***_{1,2}; and the relay node R₂ left multiplies the $1 \times \frac{{T}_{S} {N}_{S}}{2} = 1 \times 2 {N}_{S}$ -dimensional unit complex row vector **P***ᵢ* by the column vectors ***x̂***_{2,1} and ***x̂***_{2,2}, respectively, to obtain ***x***_{*R*₂}(0)=***P**ᵢ***x̂**_{2,1} and **x**_{*R*₂}(1)=**P***ᵢ****x̂***_{2,2}, wherein **P***ᵢ* is a network encoding weight value.

In the distributed orthogonal network space-time coding method, the process of relay node power control is that the relay node R₁ and the relay node R₂ calculate the Euclidean distance *d*_{*SR*₁,min} between the relay node R₁ and the *N_{S}* source nodes, and the Euclidean distance *d*_{*SR*₂,min} between the relay node R₂ and the *N_{S}* source nodes according to the modulation manner employed by the *N_{S}* source nodes, the channel fading matrix **H**_{*SR*₁}, between the source nodes and the relay node R₁, and the channel fading matrix **H**_{*SR*₂} between the source nodes and the relay node R₂; and determine power control factors *p*₁ and *p*₂ on the relay node R₁ and the relay node R₂ according to *d*_{*SR*₁,min} and *d*_{*SR*₂,min}.

The formula for calculating the Euclidean distance *d*_{*SR*,min} is: ${d}_{SR , min} = {min}_{\begin{matrix}x \left(l\right) \neq x ' \left(t\right) \\ x \left(t\right) ∈ {C}^{{N}_{S}} , x ' \left(t\right) ∈ {C}^{{N}_{S}}\end{matrix}} {\sum }_{i = 1}^{{N}_{S}} {‖ {h}_{{S}_{i} {R}_{j}} {θ}_{i} \left({x}_{i} \left(t\right) - {x}_{i}^{'} \left(t\right)\right) ‖}^{2} ,$ wherein *h*_{*SᵢRⱼ*} is a channel impulse response between the i-th source node and the j-th relay node D, *θᵢ* is a phase response of the i-th source node, *xᵢ*(*t*) is a symbol that is possibly transmitted by the i-th source node, and *x'ᵢ*(*t*) is another symbol that is possibly transmitted by the i-th source node.

There are two methods for determining the power control factors *p*₁ and *p*₂ according to the variation characteristics of the channel fading matrix:
Method 1, the channel fading matrix is a quasi-static matrix with slow variations, then the calculation formula for the power control factor is: ${p}_{n} = \frac{min \left\{{d}_{S {R}_{n} , min} {σ}_{S {R}_{n}}^{2} , {| {h}_{{R}_{n} D} |}^{2} {σ}_{{R}_{n} D}^{2}\right\}}{{| {h}_{{R}_{n} D} |}^{2} {σ}_{{R}_{n} D}^{2}} ,$ wherein *pₙ* is the power control factor of the n-th relay node, *d*_{*SRₙ*,min} is the Euclidean distance from the information source to the n-th relay node, ${σ}_{S {R}_{n}}^{2}$ is variance of the channel impulse response between the information source and the n-th relay node, *h_{RₙD}* is the channel impulse response between the n-th relay node and the target node D, and ${σ}_{{R}_{n} D}^{2}$ is variance of the channel impulse response between the n-th relay node and the target node, and
   it can be known from the above formula, the *p*₁ and *p*₂ are: ${p}_{1} = \frac{min \left\{{d}_{S {R}_{1} , min} {σ}_{S {R}_{1}}^{2} , {| {h}_{{R}_{1} D} |}^{2} {σ}_{{R}_{1} D}^{2}\right\}}{{| {h}_{{R}_{1} D} |}^{2} {σ}_{{R}_{1} D}^{2}} and {p}_{2} = \frac{min \left\{{d}_{S {R}_{2} , min} {σ}_{S {R}_{2}}^{2} , {| {h}_{{R}_{2} D} |}^{2} {σ}_{{R}_{2} D}^{2}\right\}}{{| {h}_{{R}_{2} D} |}^{2} {σ}_{{R}_{2} D}^{2}} ;$
Method 2, the channel fading matrix varies relatively faster, then the calculation formula for the power control factor is: ${p}_{n} = \frac{min \left\{{d}_{S {R}_{n} , min} {σ}_{S {R}_{n}}^{2} , {σ}_{{R}_{n} D}^{2}\right\}}{{σ}_{{R}_{n} D}^{2}}$ wherein *pₙ* is the power control factor of the n-th relay node, *d*_{*SRₙ*,min} is the Euclidean distance from the information source to the n-th relay node, ${σ}_{S {R}_{n}}^{2}$ is variance of the channel impulse response between the information source and the n-th relay node, and ${σ}_{{R}_{n} D}^{2}$ is variance of the channel impulse response between the n-th relay node and the target node, and
   it can be known from the above formula, the *p*₁ and *p*₂ are: ${p}_{1} = \frac{min \left\{{d}_{S {R}_{1} , min} {σ}_{S {R}_{1}}^{2} , {σ}_{{R}_{1} D}^{2}\right\}}{{σ}_{{R}_{1} D}^{2}} and {p}_{2} = \frac{min \left\{{d}_{S {R}_{2} , min} {σ}_{S {R}_{2}}^{2} , {σ}_{{R}_{2} D}^{2}\right\}}{{σ}_{{R}_{2} D}^{2}} .$

In the distributed orthogonal network space-time coding method, the process of compressed data distributed space-time coding and transmission is that the relay nodes R₁ and R₂ perform transmission according to the orthogonal space-time coding matrix, using respective compressed data ***x***_{*R*₁}(0), ***x***_{*R*₁} (1), ***x***_{*R*₂}(0) and ***x***_{*R*₂} (1), and the power control factors *p*₁ and *p*₂, viz. the relay node R₁ transmits signals $\sqrt{{p}_{1}} {x}_{{R}_{1}} \left(0\right)$ and $- \sqrt{{p}_{1}} {\left({x}_{{R}_{1}} \left(1\right)\right)}^{*}$ in the *T_{S}*th symbol period and the *T_{S}*+1th symbol period, respectively, and the relay node R₂ transmits signals $\sqrt{{p}_{2}} {x}_{{R}_{2}} \left(1\right)$ and $\sqrt{{p}_{2}} {\left({x}_{{R}_{2}} \left(0\right)\right)}^{*}$ in the *T_{S}*th symbol period and the *T_{S}*+1th symbol period, respectively. According to the signals transmitted by the relay nodes R₁ and R₂ in the *T_{S}* th symbol period and the *T_{S}*+1th symbol period, the following 2×2 distributed space-time coding matrix can be formed: $\left[\begin{matrix}\sqrt{{p}_{1}} {x}_{{R}_{1}} \left(0\right) & \sqrt{{p}_{2}} {x}_{{R}_{2}} \left(1\right) \\ - \sqrt{{p}_{1}} {x}_{{R}_{1}}^{*} \left(1\right) & \sqrt{{p}_{2}} {x}_{{R}_{2}}^{*} \left(0\right)\end{matrix}\right] = \left[\begin{matrix}\sqrt{{p}_{1}} {P}_{1} {\hat{x}}_{1,1} & \sqrt{{p}_{2}} {P}_{1} {\hat{x}}_{2,2} \\ - \sqrt{{p}_{1}} {\left({P}_{1} {\hat{x}}_{1,2}\right)}^{*} & \sqrt{{p}_{2}} {\left({P}_{1} {\hat{x}}_{2,1}\right)}^{*}\end{matrix}\right] .$

Another object of the present invention is to provide a distributed orthogonal network space-time coding relay transmission system based on a distributed orthogonal network space-time coding method. In order to achieve the object, the technical solution of the present invention is implemented as follows:
a distributed orthogonal network space-time coding relay transmission system comprising a target node, a source node and a relay node, characterized in that:
   the source node is used for broadcasting data information to the relay node and the target node in *T_{SR}* symbol periods; and
   the relay node is used for performing distributed orthogonal network space-time coding on the received data information, and transmitting the encoded data to the target node, wherein the relay node accomplishes five procedures within 2 symbol periods, viz. relay node decoding, estimation information grouping, estimation information compression, relay node power control and compressed data distributed space-time coding and transmission.

The processing steps of the distributed orthogonal network space-time coding relay transmission system are identical to the steps of the distributed orthogonal network space-time coding method.

As in the solution, the data transmitted by Ns users in *Tₛ* time slots is forwarded at the relay node within two time slots through the network encoding and the distributed space time codes, the throughput in the solution is *Tₛ*/(*Tₛ* + 2) symbols/user/time slot, and when the number of the source nodes Ts>2, the throughput is greater than the throughput of the existing complex domain network encoding. In addition, when Ts approaches infinity, the throughput in the solution tends to 1 symbol/user/symbol period.

Other characteristics and advantages of the present invention will be explained in the following description, and moreover, parts of them become obvious from the description, or understood by carrying out the present invention. The object and other advantages of the present invention can be realized and obtained through the structure particularly mentioned in the description, the claims, and the accompanying drawings.

### Brief Description of the Drawings

The drawings herein are used to provide further understanding of the present invention and form a part of the specification. The embodiments of the present invention and the description thereof are used to explain the present invention rather than unduly limit the present invention. In the accompanying drawings:
Fig. 1 is the wireless communication network model comprising a plurality of source nodes, a relay node, and a target node according to the present invention;
Fig. 2 is a principle structure diagram of the technical solution of the present invention;
Fig. 3 is a principle structure diagram of Example 1 of the present invention;
Fig. 4 is a performance curve of Example 1 of the present invention;
Fig. 5 is a principle structure diagram of Example 2 of the present invention;
Fig. 6 is a curve of performance comparison of Example 1 and Example 2 of the present invention;
Fig. 7 is a principle structure diagram of Example 3 of the present invention;
Fig. 8 is a performance simulation diagram of Example 3 of the present invention;
Fig. 9 is a principle structure diagram of Example 4 of the present invention; and
Fig. 10 is a performance simulation diagram of Example 4 of the present invention.

### Detailed Description of the Embodiments

In order to make the object, the technical solution and the advantages of the present invention clear, the present invention is described in detail as follows with examples and with reference to the drawings.

### Embodiment 1

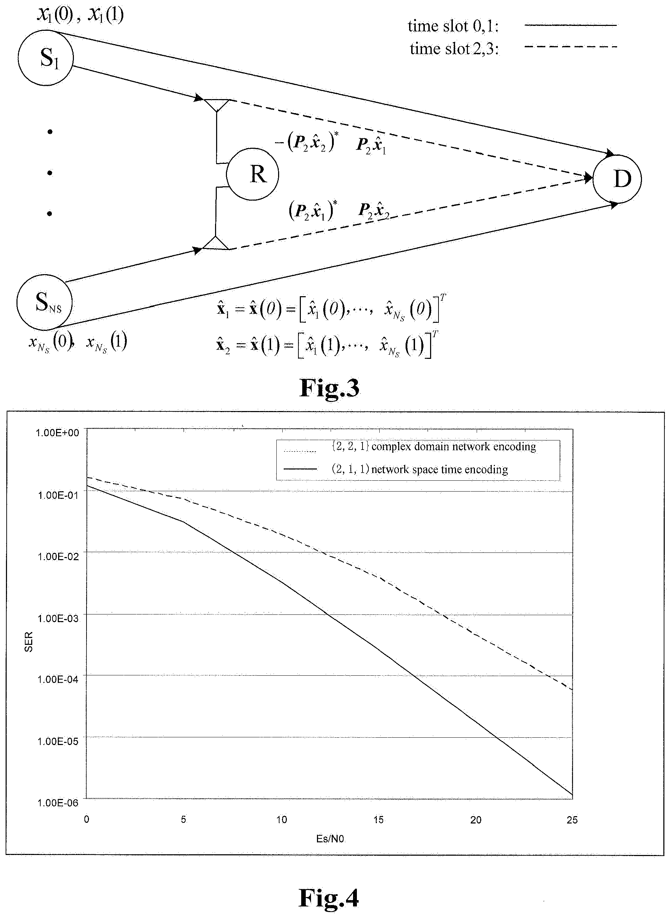

Referring to Fig. 3, here *T_{SR}* =2, the orthogonal network space-time coding method provided in the example of the present invention is completed in two stages, the first stage is a stage of source node broadcasting data information, which requires *T_{SR}* =2 symbol periods, and the second stage is a stage of relay node performing network space-time coding and transmission, which requires 2 symbol periods.

In the stage of source node broadcasting data information, Ns source nodes simultaneously transmit information by broadcast to a relay node R and a target node D, wherein the signals received by the relay node R and the target node D in the t-th symbol period are respectively denoted as ***y**_{SR}*(*t*) and ***y**_{SD}*(*t*). This stage needs *T_{SR}* = 2 symbol periods.

In the stage of relay node performing network space-time coding and transmission, five procedures need to be accomplished, viz. relay node decoding, estimation information grouping, estimation information compression, compressed data space-time coding and space time transmission.

In the stage of relay node performing network space-time coding and transmission, the process of relay node decoding is: the relay node R performs maximum likelihood decoding according to the received signal ***y**_{SR}*(*t*), to obtain estimation information ***x̂***(*t*) of signal vectors ***x***(*t*) transmitted by Ns source nodes: $\hat{x} \left(t\right) = {argmin}_{x \left(t\right)} {‖ {y}_{SR} \left(t\right) - {H}_{SR} x \left(t\right) ‖}^{2} ,$ wherein **x̂**(*t*)=[*x̂*₁(*t*) ··· *x̂_{N_{S}}*(*t*)]*^{T}*, *t*=0,1 and ${H}_{SR} = \left[\begin{matrix}{h}_{{S}_{1} R} & , ⋯ , & {h}_{{S}_{{N}_{S}} R}\end{matrix}\right]$ are channel fading matrixes between the Ns source nodes and the relay node R, and arg min indicates maximum likelihood decoding.

In the stage of relay node performing network space-time coding and transmission, the process of estimation information grouping is: the relay node R divides the estimation values of the signals transmitted by all of the Ns source nodes in the 0^{th} symbol period into two $\frac{{T}_{SR} {N}_{S}}{2} \times 1 = {N}_{S} \times 1$ -dimensional column vectors, wherein the first vector ***x̂***₁ includes an estimation value, which is estimated by the relay node, of the signal transmitted by the Ns source nodes in the 0^{th} symbol period, viz. ***x***₁=***x̂***(0); and the second vector ***x̂***₂ includes an estimation value, which is estimated by the relay node, of the signal transmitted by the Ns source nodes in the $\frac{{T}_{SR}}{2} = 1 th$ symbol period, viz. ***x̂***₂ = ***x̂***(1).

In the stage of relay node performing network space-time coding and transmission, the process of estimation information compression is: the $\frac{{T}_{SR} {N}_{S}}{2} \times 1 = {N}_{S} \times 1$ -dimensional column vector ***x̂***₁ is compressed into a complex signal, viz. the $1 \times \frac{{T}_{SR} {N}_{S}}{2} = 1 \times {N}_{S}$ -dimensional unit complex row vector ***P***₂ is left multiplied by the column vector ***x̂***₁ to obtain *x*_{*R*1} = ***P***₂***x̂***₁; and the $\frac{{T}_{SR} {N}_{S}}{2} \times 1 = {N}_{S} \times 1$ -dimensional column vector ***x̂***₂ is compressed into a complex signal, viz. the $1 \times \frac{{T}_{SR} {N}_{S}}{2} = 1 \times {N}_{S}$ -dimensional unit complex row vector ***P***₂ is left multiplied by the column vector ***x̂***₂ to obtain *x*_{*R*₂} = ***P***₂***x̂***₂.

In the stage of relay node performing network space-time coding and transmission, the process of compressed data space-time coding is: the signals *x*_{*R*₁} and *x*_{R₂} obtained during the process of estimation information compression form a 2×2 matrix, wherein the element in the first row and the first column of the 2×2 matrix is *x*_{*R*₁}, the element in the first row and the second column of the 2×2 matrix is *x*_{*R*₂}*,* the element in the second row and the first column of the 2×2 matrix is the negative conjugation of *x*_{*R*₂}, viz. $- {x}_{{R}_{2}}^{*} ,$ and the element in the * second row and the second column of the 2×2 matrix is the conjugation of *x*_{*R*₁}, viz. ${x}_{{R}_{1}}^{*} .$ The 2×2 matrix is shown as follows: $\left[\begin{matrix}{x}_{{R}_{1}} & {x}_{{R}_{2}} \\ - {x}_{{R}_{2}}^{*} & {x}_{{R}_{1}}^{*}\end{matrix}\right] = \left[\begin{matrix}{P}_{2} {\hat{x}}_{1} & {P}_{2} {\hat{x}}_{2} \\ - {\left({P}_{2} {\hat{x}}_{2}\right)}^{*} & {\left({P}_{2} {\hat{x}}_{1}\right)}^{*}\end{matrix}\right] .$

In the stage of relay node performing network space-time coding and transmission, the process of space time transmission is: the 2×2 matrix is transmitted respectively by two antennas of the relay node within two symbol periods, wherein two signals in the first row of the 2×2 matrix are transmitted to the target node by the two antennas of the relay node in the *T_{SR}* = 2 th symbol period, viz. the first antenna transmits the signal *x*_{*R*₁} in the *T_{SR}* = 2 th symbol period, and the second antenna transmits the signal *x*_{*R*₂} in the *T_{SR}* = 2 th symbol period; and two signals in the second row of the 2×2 matrix are transmitted to the target node by the two antennas of the relay node in the *T_{SR}* + 1 = 3th symbol period, viz. the first antenna transmits the signal $- {x}_{{R}_{2}}^{*}$ in the *T_{SR}* + 1 = 3th symbol period, and the second antenna transmits the signal ${x}_{{R}_{1}}^{*}$ in the *T_{SR}* + 1 = 3th symbol period.

In the example, the vector ***P***₂ is selected as follows: ${P}_{2} = \frac{1}{\sqrt{{N}_{s}}} \left[\begin{matrix}1 & exp \left(j 2 π \times 3 / \left(2 {N}_{s}\right)\right) & ⋯ & exp \left(j 2 π \times 3 \left({N}_{s} - 1\right) / \left(2 {N}_{s}\right)\right)\end{matrix}\right] .$

As *T_{SR}* =2, the throughput of the solution of the example is $\frac{{T}_{SR}}{{T}_{SR} + 2} = \frac{1}{2}$ symbols/user/symbol period.

Fig. 4 shows the simulation curve when the example is employed, and the performance comparison between the space-time coding provided by the example and the complex domain cooperative network encoding, wherein the ordinate is symbol error rate, and the abscissa is signal-to-noise ratio of each symbol. The solutions provided by the examples of the present invention and the solution of the complex domain network encoding both employ the BPSK modulation, and both have a throughput of 1/2 symbols/user/symbol period. It can be seen from the figure, when SER=10⁻⁴, compared with the solution of the complex domain network encoding, the solution provided by the present invention has 5dB gains. In addition, in the case of the same throughput, the solution of the example of the present invention can obtain extra diversity gains. The main reason is that, in the solution of the example of the present invention, when the relay node detects the data information of the source node, the method of maximal ratio combining can be used. Thus, compared with the solution of complex domain network encoding with two relay nodes, the solution of the present invention can obtain extra receiving diversity gains.

### Embodiment 2

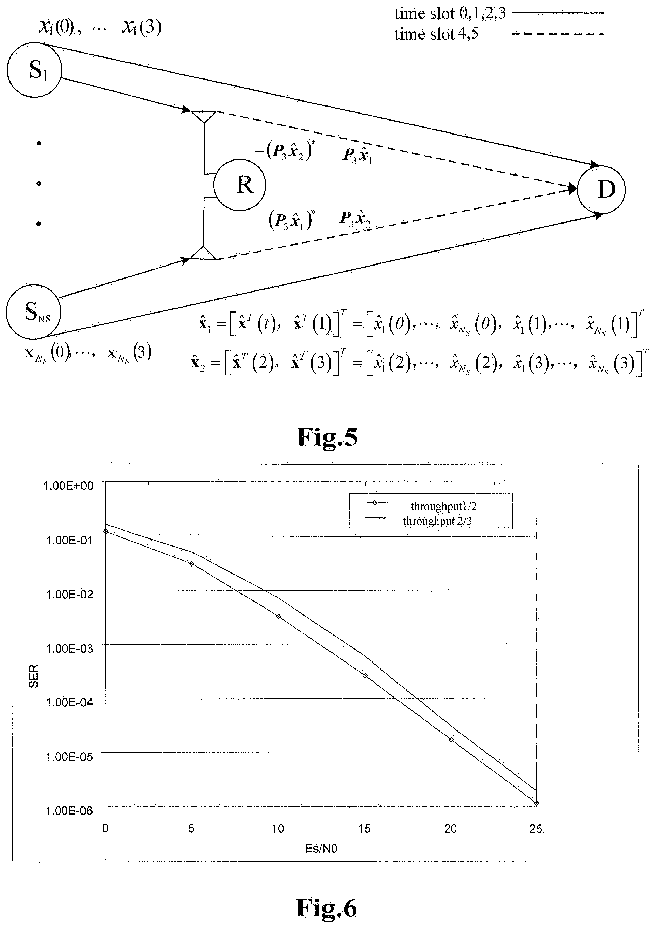

Referring to Fig. 5, here *T_{SR}* =4, the orthogonal network space-time coding method provided in the example of the present invention is completed in two stages, which requires *T_{SR}* + 2 symbol periods, wherein the first stage is that the source node broadcasts data information, which requires *T_{SR}* =4 symbol periods, and the second stage is that the relay node performs network space-time coding and transmission, which requires 2 symbol periods.

In the stage of source node broadcasting data information, Ns source nodes simultaneously transmit information by broadcast to the relay node R and the target node D, wherein the signals received by the relay node R and the target node D in the t-th symbol period are respectively denoted as ***y**_{SR}*(*t*) and ***y**_{SD}*(*t*). This stage needs *T_{SR}* = 2 symbol periods.

In the stage of relay node performing network space-time coding and transmission, five procedures need to be accomplished, viz. relay node decoding, estimation information grouping, estimation information compression, compressed data space time transmission and space time transmission.

In the stage of relay node performing network space-time coding and transmission, the process of relay node decoding is: the relay node R performs maximum likelihood decoding according to the received signal ***y**_{SR}*(*t*), to obtain estimation information ***x̂***(*t*) of signal vector ***x***(*t*) transmitted by the Ns source nodes: $\hat{x} \left(t\right) = {argmin}_{x \left(t\right)} {‖ {y}_{SR} \left(t\right) - {H}_{SR} x \left(t\right) ‖}^{2} ,$ wherein **x̂**(*t*)=[*x̂*₁(*t*) ··· *x̂*_{*N_{S}*} (*t*)]*^{T}*, and wherein *t* = 0,1,2,3.

In the stage of relay node performing network space-time coding and transmission, the process of estimation information grouping is: the relay node R divides the estimation values of the signals transmitted by all of the Ns source nodes from the 0^{th} symbol period to the *T_{SR}* - 1 = 3th symbol period into two $\frac{{T}_{SR} {N}_{S}}{2} \times 1 = 2 {N}_{S} \times 1$ -dimensional column vectors, wherein the first vector ***x***₁ includes an estimation value, which is estimated by the relay node, of the signal transmitted by the Ns source nodes from the 0^{th} symbol period to the $\frac{{T}_{SR}}{2} - 1 = 1 th$ symbol period, viz. **x̂**₁=[**x̂***^{T}*(0) **x̂***^{T}*(1)]*^{T}*; and the second vector ***x̂***₂ includes an estimation value, which is estimated by the relay node, of the signal transmitted by the Ns source nodes from the $\frac{{T}_{SR}}{2} = 2$ th symbol period to the $\frac{{T}_{SR}}{2} + 1 = 3 th$ symbol period, viz. **x̂**₂=[**x̂***^{T}*(2) **x̂***^{T}*(3)]*^{T}*.

In the stage of relay node performing network space-time coding and transmission, the process of estimation information compression is: the $\frac{{T}_{SR} {N}_{S}}{2} \times 1 = 2 {N}_{S} \times 1$ -dimensional column vector ***x̂***₁ is compressed into a complex signal, viz. the $1 \times \frac{{T}_{SR} {N}_{S}}{2} = 1 \times 2 {N}_{S}$ -dimensional unit complex row vector ***P***₃ is left multiplied by the column vector ***x̂***₁ to obtain *x*_{*R*₁} = ***P***₃***x̂***₁; and the $\frac{{T}_{SR} {N}_{S}}{2} \times 1 = 2 {N}_{S} \times 1$ -dimensional column vector ***x̂***₂ is compressed into a complex signal, viz. the $1 \times \frac{{T}_{SR} {N}_{S}}{2} = 1 \times 2 {N}_{S}$ -dimensional unit complex row vector ***P***₃ is left multiplied by the column vector ***x̂***₂ to obtain *x*_{*R*₂} = ***P***₃***x̂***₂.

In the stage of relay node performing network space-time coding and transmission, the process of compressed data space-time coding is: the signals *x*_{*R*₁} and *x*_{*R*₂} obtained during the process of estimation information compression form a 2×2 matrix, wherein the element in the first row and the first column of the 2×2 matrix is *x*_{*R*₁}, the element in the first row and the second column of the 2×2 matrix is *x*_{*R*₂}, the element in the second row and the first column of the 2×2 matrix is the negative conjugation of *x*_{*R*₂}, viz. $- {x}_{{R}_{2}}^{*} ,$ and the element in the second row and the second column of the 2×2 matrix is the conjugation of *x*_{*R*₁}, viz. ${x}_{{R}_{1}}^{*} .$ The 2×2 matrix is shown as follows: $\left[\begin{matrix}{x}_{{R}_{1}} & {x}_{{R}_{2}} \\ - {x}_{{R}_{2}}^{*} & {x}_{{R}_{1}}^{*}\end{matrix}\right] = \left[\begin{matrix}{P}_{3} {\hat{x}}_{1} & {P}_{3} {\hat{x}}_{2} \\ - {\left({P}_{3} {\hat{x}}_{2}\right)}^{*} & {\left({P}_{3} {\hat{x}}_{1}\right)}^{*}\end{matrix}\right] .$

In the stage of relay node performing network space-time coding and transmission, the process of space time transmission is: the 2×2 matrix is transmitted respectively by two antennas of the relay node within two symbol periods, wherein two signals in the first row of the 2×2 matrix are transmitted to the target node by the two antennas of the relay node in the *T_{SR}* = 4th symbol period, viz. the first antenna transmits the signal *x*_{*R*₁} in the *T_{SR}* = 4th symbol period, and the second antenna transmits the signal *x*_{*R*₂} in the *T_{SR}* = 4th symbol period; and two signals in the second row of the 2×2 matrix are transmitted to the target node by the two antennas of the relay node in the *T_{SR}* + 1 = 5th symbol period, viz. the first antenna transmits the signal $- {x}_{{R}_{2}}^{*}$ in the *T_{SR}* + 1 = 5th symbol period, and the second antenna transmits the signal ${x}_{{R}_{1}}^{*}$ in the *T_{SR}* + 1 = 5th symbol period.

In the example, the 1×2*N_{S}* -dimensional vector ***P***₃ is selected as follows: ${P}_{3} = \frac{1}{\sqrt{{N}_{s}}} \left[\begin{matrix}1 & exp \left(j 2 π / \left(4 {N}_{s}\right)\right) & ⋯ & exp \left(j 2 π \left(2 {N}_{s} - 1\right) / \left(4 {N}_{s}\right)\right)\end{matrix}\right] .$

As *T_{SR}* =4, the throughput of the solution provided by the example is $\frac{{T}_{SR}}{{T}_{SR} + 2} = \frac{2}{3}$ symbols/user/symbol period.

Fig. 6 shows a curve of performance comparison of the solution of the present invention with different throughputs, wherein the ordinate is symbol error rate, and the abscissa is signal-to-noise ratio of each symbol. It can be seen from the Fig. that as the throughput increases, the performance of network space-time coding slightly decreases, but there is no obvious change in the diversity gain when the throughputs are different.

Further, with regard to different power control manners in the solution, Example 3 and Example 4 are provided.

### Embodiment 3

Fig. 7 is a schematic diagram of the distributed relay network in which there are Ns source nodes and two relay nodes. When Ts=2, the distributed orthogonal network space-time coding method is carried out in two stages, which require *T_{S}* + 2 = 4 symbol periods.

The first stage is that the source nodes broadcast data information, which requires *T_{S}* = 2 symbol periods.

The second stage is that the relay nodes R₁ and R₂ perform distributed orthogonal network space-time coding and transmission, which requires 2 symbol periods.

The stage of source node broadcasting data information is that the Ns source nodes simultaneously transmit information by broadcast to the relay nodes R₁, R₂ and the target node D, wherein the signal vector transmitted by the Ns source nodes is denoted as **x**(*t*)=[*x*₁(*t*) ··· *x_{N_{S}}*(*t*)]*^{T},* the signals received by the relay nodes R₁ and R₂ in the t-th symbol period are respectively denoted as ***y***_{*SR*₁}(*t*) and ***y***_{*SR*₂}(*t*), the signal received by the target node D in the t-th symbol period is denoted as ***y**_{SD}*(*t*). This stage needs *T_{S}* symbol periods, and *t* = 0,1.

In the stage of the relay nodes R₁ and R₂ performing distributed orthogonal network space-time coding and transmission, five procedures need to be accomplished, viz. relay node decoding, estimation information grouping, estimation information compression, relay node power control, and compressed data distributed space-time coding and transmission.

In the distributed orthogonal network space-time coding method, the process of relay node decoding is that the relay nodes R₁ and R₂ respectively perform maximum likelihood decoding according to the received signals ***y***_{*SR*₁}(*t*) and ***y***_{*SR*₂}, (*t*), wherein the estimation information of signal vector which is transmitted by the Ns source nodes and obtained by the relay node R₁ decoding is denoted as **x̂**₁(*t*)=[*x̂*_{1,1}(*t*) ··· *x̂*_{1,*N_{S}*}(*t*)]*^{T}*, the estimation information of signal vector which is transmitted by the Ns source nodes and obtained by the relay node R₂ decoding is denoted as **x̂**₂(*t*)=[*x̂*_{2,1}(*t*) ··· *x̂*_{2,*N_{S}*}(*t*)]*^{T}*, *t* = 0,1. The estimation information **x̂**₁(*t*) and ***x̂***₂(*t*) are calculated according to the following formulae: ${\hat{x}}_{1} \left(t\right) = {argmin}_{x \left(t\right)} {‖ {y}_{S {R}_{1}} \left(t\right) - {H}_{S {R}_{1}} x \left(t\right) ‖}^{2} ,$ ${\hat{x}}_{2} \left(t\right) = {argmin}_{x \left(t\right)} {‖ {y}_{S {R}_{2}} \left(t\right) - {H}_{S {R}_{2}} x \left(t\right) ‖}^{2} ,$ wherein ${H}_{S {R}_{1}} = \left[\begin{matrix}{h}_{{S}_{1} {R}_{1}} & , ⋯ , & {h}_{{S}_{{N}_{S}} {R}_{1}}\end{matrix}\right]$ is a channel fading matrix between the Ns source nodes and the relay node R₁, and ${H}_{S {R}_{2}} = \left[\begin{matrix}{h}_{{S}_{1} {R}_{2}} & , ⋯ , & {h}_{{S}_{{N}_{S}} {R}_{2}}\end{matrix}\right]$ is a channel fading matrix between the Ns source nodes and the relay node R₂.

In the distributed orthogonal network space-time coding method, the process of estimation information grouping is that the relay nodes R₁ and R₂ respectively group the estimation information of the Ns source nodes in *T_{S}* symbol periods, to obtain two $\frac{{T}_{S} {N}_{S}}{2} \times 1 = {N}_{S} \times 1$ -dimensional column vectors ***x̂***₁ and ***x̂***₂.

The relay node R₁ divides the estimation signals ***x̂***₁(0) and ***x̂***₁(1) in *T_{S}* = 2 symbol periods into two parts: ${\hat{x}}_{1,1} = {\hat{x}}_{1} \left(0\right) = {\left[{\hat{x}}_{1,1} \left(0\right) , ⋯ , {\hat{x}}_{1, {N}_{S}} \left(0\right)\right]}^{T} and {\hat{x}}_{1,2} = {\hat{x}}_{1} \left(1\right) = {\left[{\hat{x}}_{1,1} \left(1\right) , ⋯ , {\hat{x}}_{1, {N}_{S}} \left(1\right)\right]}^{T} .$

The relay node R₂ divides the estimation signals ***x̂***₂(0) and ***x̂***₂(1) in *T_{S}* = 2 symbol periods into two parts: ${\hat{x}}_{2,1} = {\hat{x}}_{2} \left(0\right) = {\left[{\hat{x}}_{2,1} \left(0\right) , ⋯ , {\hat{x}}_{2, {N}_{S}} \left(0\right)\right]}^{T} and {\hat{x}}_{2,2} = {\hat{x}}_{2} \left(1\right) = {\left[{\hat{x}}_{2,1} \left(1\right) , ⋯ , {\hat{x}}_{2, {N}_{S}} \left(1\right)\right]}^{T} .$

In the distributed orthogonal network space-time coding method, the process of estimation information compression is that the relay nodes R₁ and R₂ respectively compress the four $\frac{{T}_{S} {N}_{S}}{2} \times 1 = {N}_{S} \times 1$ -dimensional column vectors ***x̂***_{1,1}, ***x̂***_{1,2}, ***x̂***_{2,1}, and ***x̂***_{2,2}, using $1 \times \frac{{T}_{S} {N}_{S}}{2} = 1 \times {N}_{S}$ -dimensional unit complex row vector ***P***₂, viz. the relay node R₁ left multiplies the $1 \times \frac{{T}_{S} {N}_{S}}{2} = 1 \times {N}_{S}$ -dimensional unit complex row vector ***P***₂ by the column vectors ***x̂***_{1,1} and ***x̂***_{1,2}, respectively, to obtain ***x̂***_{*R*₁}(0) = ***P***₂***x̂***_{1,1} and ***x***_{*R*₁}(1)= ***P***₂***x̂***_{1,2}; and the relay node R₂ left multiplies the $1 \times \frac{{T}_{S} {N}_{S}}{2} = 1 \times {N}_{S}$ -dimensional unit complex row vector ***P***₂ by the column vectors ***x̂***_{2,1} and ***x̂***_{2,2}, respectively, to obtain ***x***_{*R*₂}(0)=***P*₂*x̂***_{2,1} and ***x***_{*R*₂}(1)= ***P***₂***x̂***_{2,2}.

In the distributed orthogonal network space-time coding method, the process of relay node power control is that the relay node *Rᵢ* calculates the Euclidean distances *d*_{*SR*₁,min} and *d*_{*SR*₂*,*min} according to the modulation manner employed by the *N_{S}* source nodes, and the channel fading matrix ***H***_{*SRⱼ*} between the source node and the relay node *Rⱼ*; and determines power control factors *p*₁ and *p*₂ on the relay nodes R₁ and R₂ according to *d*_{*SR*₁,min} and *d*_{*SR*₂,min}.

In the distributed orthogonal network space-time coding method, there are two methods for determining the power control factors *p*₁ and *p*₂ according to the variation characteristics of the channel fading matrix:
Method 1, the channel fading matrix is quasi-static, viz. with slow variations, then the power control factors *p*₁ and *p*₂ are: ${p}_{1} = \frac{min \left\{{d}_{S {R}_{1} , min} {σ}_{S {R}_{1}}^{2} , {| {h}_{{R}_{1} D} |}^{2} {σ}_{{R}_{1} D}^{2}\right\}}{{| {h}_{{R}_{1} D} |}^{2} {σ}_{{R}_{1} D}^{2}} and {p}_{2} = \frac{min \left\{{d}_{S {R}_{2} , min} {σ}_{S {R}_{2}}^{2} , {| {h}_{{R}_{2} D} |}^{2} {σ}_{{R}_{2} D}^{2}\right\}}{{| {h}_{{R}_{2} D} |}^{2} {σ}_{{R}_{2} D}^{2}} ;$
Method 2, the channel fading matrix varies relatively faster, then the power control factors *p*₁ and *p*₂ are: ${p}_{1} = \frac{min \left\{{d}_{S {R}_{1} , min} {σ}_{S {R}_{1}}^{2} , {σ}_{{R}_{1} D}^{2}\right\}}{{σ}_{{R}_{1} D}^{2}} and {p}_{2} = \frac{min \left\{{d}_{S {R}_{2} , min} {σ}_{S {R}_{2}}^{2} , {σ}_{{R}_{2} D}^{2}\right\}}{{σ}_{{R}_{2} D}^{2}} ,$ wherein the calculation formula of the Euclidean distance *d*_{*SRᵢ*,min} is: ${d}_{SR , min} = {min}_{\begin{matrix}x \left(t\right) \neq x ' \left(t\right) \\ x \left(t\right) ∈ {C}^{{N}_{S}} , x ' \left(t\right) ∈ {C}^{{N}_{S}}\end{matrix}} {\sum }_{i = 1}^{{N}_{S}} {‖ {h}_{{S}_{i} {R}_{j}} {θ}_{i} \left({x}_{i} \left(t\right) - {x}_{i}^{'} \left(t\right)\right) ‖}^{2} .$

In the distributed orthogonal network space-time coding method, the compressed data distributed space-time coding is that the relay nodes R₁ and R₂ perform transmission according to the orthogonal space-time coding matrix, using respective compressed data ***x̂***_{*R*₁}(0), ***x***_{*R*₁}(1), ***x***_{*R*₂}(0) and ***x̂****_{R₂}*(1), and the power control factors *p*₁ and *p*₂, viz. the relay nodes R₁ transmits signals $\sqrt{{p}_{1}} {x}_{{R}_{1}} \left(0\right)$ and $- \sqrt{{p}_{1}} {\left({x}_{{R}_{1}} \left(1\right)\right)}^{*}$ in the *T_{S}* = 2th symbol period and the *T_{S}* + 1 = 3 th symbol period, respectively, and the relay nodes R₂ transmits signals $\sqrt{{p}_{2}} {x}_{{R}_{2}} \left(1\right)$ and $\sqrt{{p}_{2}} {\left({x}_{{R}_{2}} \left(0\right)\right)}^{*}$ in the *T_{S}* = 2 th symbol period and the *T_{S}* + 1= 3 th symbol period, respectively. According to the signals transmitted by the relay nodes R₁ and R₂ in the *T_{S}* = 2 th symbol period and the *T_{S}* + = 3 th symbol period, the following 2×2 distributed space-time coding matrix can be formed: $\left[\begin{matrix}\sqrt{{p}_{1}} {x}_{{R}_{1}} \left(0\right) & \sqrt{{p}_{2}} {x}_{{R}_{2}} \left(1\right) \\ - \sqrt{{p}_{1}} {x}_{{R}_{1}}^{*} \left(1\right) & \sqrt{{p}_{2}} {x}_{{R}_{2}}^{*} \left(0\right)\end{matrix}\right] = \left[\begin{matrix}\sqrt{{p}_{1}} {P}_{2} {\hat{x}}_{1,1} & \sqrt{{p}_{2}} {P}_{2} {\hat{x}}_{2,2} \\ - \sqrt{{p}_{1}} {\left({P}_{2} {\hat{x}}_{1,2}\right)}^{*} & \sqrt{{p}_{2}} {\left({P}_{2} {\hat{x}}_{2,1}\right)}^{*}\end{matrix}\right] .$

In this example, the estimation signals of the relay nodes in *T_{S}* = 2 symbol periods are subjected to distributed orthogonal network space-time coding by two groups of different vectors, respectively, and are transmitted within two symbol periods, wherein the throughput can reach *T_{S}*/(*T_{S}* + 2) = 1/2 symbols/user/time slot.

In this example, the network encoding vector of the selected $1 \times \frac{{T}_{S} {N}_{S}}{2} = 1 \times {N}_{S}$ -dimensional unit complex row vector ***P***₂ is: ${P}_{2} = \frac{1}{\sqrt{2 {N}_{s}}} \left[\begin{matrix}1 & exp \left(j 3 \times 2 π / \left(2 {N}_{s}\right)\right) & ⋯ & exp \left(j 3 \times 2 π \left({N}_{s} - 1\right) / \left(2 {N}_{s}\right)\right)\end{matrix}\right] .$

Fig. 8 shows a simulation curve of the present example when the BPSK modulation is employed, wherein the ordinate is symbol error rate, and the abscissa is signal-to-noise ratio of each symbol. In the figure., (2,2,1) indicates that there are two source nodes, two relay nodes and one target node, each node has one antenna, and the throughput is 1/2 symbols/user/symbol period. It can be seen from Fig. 4 that, in the case where the throughputs are the same, the distributed orthogonal network space-time coding based on the power control algorithm 1 can obtain the best performance, when the symbol error rate SER=10⁻⁴, the encoding solution based on the power control algorithm 1 provided by the present example has approximatively 5dB gains, and the encoding solution based on the power control algorithm 2 has approximatively 4dB gains.

### Embodiment 4

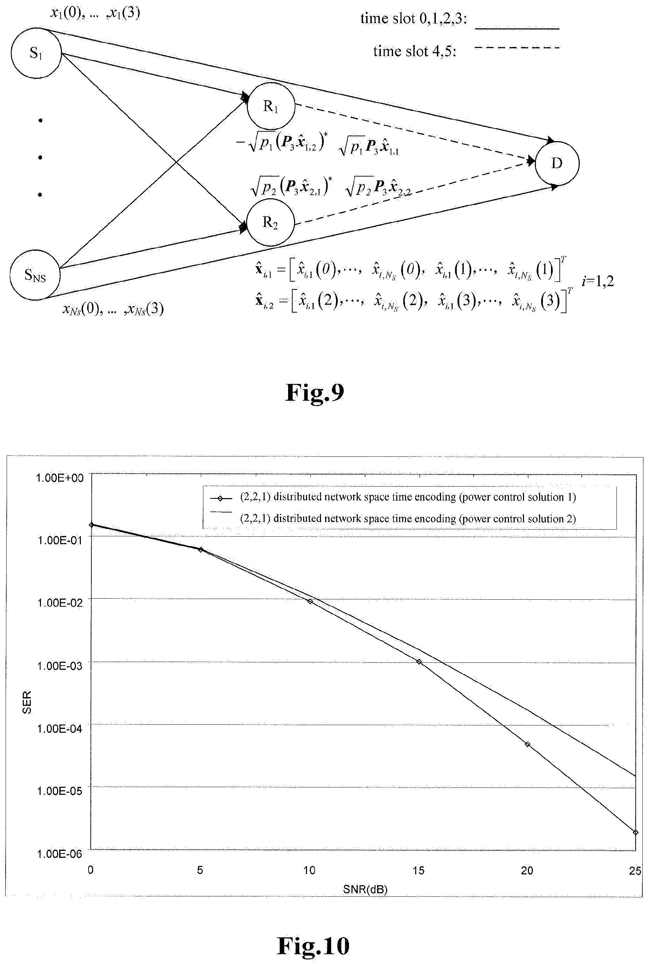

Fig. 9 is a schematic diagram of the distributed relay network in which there are Ns source nodes and two relay nodes. When Ts=4, the distributed orthogonal network space-time coding method is carried out in two stages, which requires *T_{S}* + 2 = 6 symbol periods.

The first stage is that the source nodes broadcast data information, which requires *T_{S}* = 4 symbol periods.

The second stage is that the relay nodes R₁ and R₂ perform distributed orthogonal network space-time coding and transmission, which requires 2 symbol periods.

The stage of source node broadcasting data information is that Ns source nodes simultaneously transmit information by broadcast to the relay nodes R₁, R₂ and the target node D, wherein the signal vector transmitted by the Ns source nodes is denoted as **x**(*t*) = [*x*₁(*t*) ··· *x_{N_{S}}*(*t*)]*^{T}*, the signals received by the relay nodes R₁ and R₂ in the t-th symbol period are respectively denoted as ***y***_{*SR*₁}(*t*) and ***y***_{*SR*₂}(*t*)*,* the signal received by the target node D in the t-th symbol period is denoted as ***y**_{SD}*(*t*). This stage needs *T_{S}* symbol periods, and *t* = 0,1,2,3.

In the stage of the relay nodes R₁ and R₂ performing distributed orthogonal network space-time coding and transmission, five procedures need to be accomplished, viz. relay node decoding, estimation information grouping, estimation information compression, relay node power control, and compressed data distributed space-time coding and transmission.

In the distributed orthogonal network space-time coding method, the process of relay node decoding is that the relay nodes R₁ and R₂ respectively perform maximum likelihood decoding according to the received signals ***y***_{*SR*₁}(*t*) and ***y***_{*SR*₂}(*t*), wherein the estimation information of signal vector which is transmitted by the Ns source nodes and obtained by the relay node R₁ decoding is denoted as **x̂**₁(*t*) = [*x̂*_{1,1}(*t*) ··· *x̂*_{1,*N_{S}*}(*t*)]*^{T}*, the estimation information of signal vector which is transmitted by the Ns source nodes and obtained by the relay node R₂ decoding is denoted as **x̂**₂(*t*) = [x̂_{2,1}(*t*) ··· *x̂*_{2,*N_{S}*}(*t*)]*^{T}*, *t* = 0,1,2,3. The estimation information ***x̂***₁(*t*) and ***x̂***₂(*t*) are calculated according to the following formulae: ${\hat{x}}_{1} \left(t\right) = {argmin}_{x \left(t\right)} {‖ {y}_{S {R}_{1}} \left(t\right) - {H}_{S {R}_{1}} x \left(t\right) ‖}^{2} ,$ ${\hat{x}}_{2} \left(t\right) = {argmin}_{x \left(t\right)} {‖ {y}_{S {R}_{2}} \left(t\right) - {H}_{S {R}_{2}} x \left(t\right) ‖}^{2} ,$ wherein ${H}_{S {R}_{1}} = \left[\begin{matrix}{h}_{{S}_{1} {R}_{1}} & , ⋯ , & {h}_{{S}_{{N}_{S}} {R}_{1}}\end{matrix}\right]$ is a channel fading matrix between the Ns source nodes and the relay node R₁, and ${H}_{S {R}_{2}} = \left[\begin{matrix}{h}_{{S}_{1} {R}_{2}} & , ⋯ , & {h}_{{S}_{{N}_{S}} {R}_{2}}\end{matrix}\right]$ is a channel fading matrix between the Ns source nodes and the relay node R₂.

In the distributed orthogonal network space-time coding method, the process of estimation information grouping is that the relay nodes R₁ and R₂ respectively group the estimation information of the Ns source nodes in *T_{S}* = 4 symbol periods, to obtain two $\frac{{T}_{S} {N}_{S}}{2} \times 1 = 2 {N}_{S} \times 1$ -dimensional column vectors ***x̂***₁ and ***x̂***₂.

The relay node R₁ divides the estimation signals ***x̂***₁(0),···,***x̂***₁(*Tₛ*-1) in Ts symbol periods into two parts: ${\hat{x}}_{1,1} = {\left[{\hat{x}}_{1}^{T} \left(0\right) , ⋯ , {\hat{x}}_{1}^{T} \left(\frac{{T}_{s}}{2} - 1\right)\right]}^{T} = {\left[{\hat{x}}_{1,1} \left(0\right) , ⋯ , {\hat{x}}_{1, {N}_{S}} \left(0\right) , ⋯ , {\hat{x}}_{1,1} \left(\frac{{T}_{s}}{2} - 1\right) , ⋯ , {\hat{x}}_{1, {N}_{S}} \left(\frac{{T}_{s}}{2} - 1\right)\right]}^{T} ,$ ${\hat{x}}_{1,2} = {\left[{\hat{x}}_{1}^{T} \left(\frac{{T}_{s}}{2}\right) , ⋯ , {\hat{x}}_{1}^{T} \left({T}_{s} - 1\right)\right]}^{T} = {\left[{\hat{x}}_{1,1} \left(\frac{{T}_{s}}{2}\right) , ⋯ , {\hat{x}}_{1, {N}_{S}} \left(\frac{{T}_{s}}{2}\right) , ⋯ , {\hat{x}}_{1,1} \left({T}_{s} - 1\right) , ⋯ , {\hat{x}}_{1, {N}_{S}} \left({T}_{s} - 1\right)\right]}^{T} .$

The relay node R₂ divides the estimation signals ***x̂***₂ (*t*),···,***x̂***₂(*t*+*Tₛ -* 1) in Ts symbol periods into two parts: ${\hat{x}}_{2,1} = {\left[{\hat{x}}_{2}^{T} \left(0\right) , ⋯ , {\hat{x}}_{2}^{T} \left(\frac{{T}_{s}}{2} - 1\right)\right]}^{T} = {\left[{\hat{x}}_{2,1} \left(0\right) , ⋯ , {\hat{x}}_{2, {N}_{S}} \left(0\right) , ⋯ , {\hat{x}}_{2,1} \left(\frac{{T}_{s}}{2} - 1\right) , ⋯ , {\hat{x}}_{2, {N}_{S}} \left(\frac{{T}_{s}}{2} - 1\right)\right]}^{T} ,$ ${\hat{x}}_{2,2} = {\left[{\hat{x}}_{1}^{T} \left(\frac{{T}_{s}}{2}\right) , ⋯ , {\hat{x}}_{2}^{T} \left({T}_{s} - 1\right)\right]}^{T} = {\left[{\hat{x}}_{2,1} \left(\frac{{T}_{s}}{2}\right) , ⋯ , {\hat{x}}_{2, {N}_{S}} \left(\frac{{T}_{s}}{2}\right) , ⋯ , {\hat{x}}_{2,1} \left({T}_{s} - 1\right) , ⋯ , {\hat{x}}_{2, {N}_{S}} \left({T}_{s} - 1\right)\right]}^{T} .$

In the distributed orthogonal network space-time coding method, the process of estimation information compression is that the relay nodes R₁ and R₂ respectively compress the four $\frac{{T}_{S} {N}_{S}}{2} \times 1 = 2 {N}_{S} \times 1$ -dimensional column vectors ***x̂***_{1,1}, ***x̂***_{1,2}, ***x̂***_{2,1}, and ***x̂***_{2,2}, using $1 \times \frac{{T}_{S} {N}_{S}}{2} = 1 \times 2 {N}_{S}$ -dimensional unit complex row vector ***P***₃, viz. the relay node R₁ left multiplies the $1 \times \frac{{T}_{S} {N}_{S}}{2} = 1 \times 2 {N}_{S}$ -dimensional unit complex row vector ***P***₃ by the column vectors ***x̂***_{1,1} and ***x̂***_{1,2}, respectively, to obtain ***x***_{*R*₁}(0)=***P***₃***x̂***_{1,1} and ***x***_{*R*₁}(*1*)=***P***₃***x̂***_{1,2}; and the relay node R₂ left multiplies the $1 \times \frac{{T}_{S} {N}_{S}}{2} = 1 \times 2 {N}_{S}$ -dimensional unit complex row vector ***P***₃ by the column vectors ***x̂***_{2,1} and ***x̂***_{2,2}, respectively, to obtain ***x***_{*R*₂}(0)=***P***₃***x̂***_{2,1} and ***x***_{*R*₂}(1)=***P***₃***x̂***_{2,2}.

In the distributed orthogonal network space-time coding method, the relay node power control is that the relay node *Rᵢ* calculates the Euclidean distances *d*_{*SR*₁},min and *d*_{*SR*₂},min according to the modulation manner employed by the *N_{S}* source nodes, and the channel fading matrix ***H**_{SRⱼ}* between the source node and the relay node *Rⱼ*; and determines power control factors *p*₁ and *p*₂ on the relay nodes R₁ and R₂ according to *d*_{*SR*₁,min} and *d*_{*SR*₂,min}.

In the distributed orthogonal network space-time coding method, there are two methods for determining the power control factors *p*₁ and *p*₂ according to the variation characteristics of the channel fading matrix:
Method 1, the channel fading matrix is quasi-static, viz. the channel fading matrix varies slowly, then the power control factors *p*₁ and *p*₂ are: ${p}_{1} = \frac{min \left\{{d}_{S {R}_{1} , min} {σ}_{S {R}_{1}}^{2} , {| {h}_{{R}_{1} D} |}^{2} {σ}_{{R}_{1} D}^{2}\right\}}{{| {h}_{{R}_{1} D} |}^{2} {σ}_{{R}_{1} D}^{2}} and {p}_{2} = \frac{min \left\{{d}_{S {R}_{2} , min} {σ}_{S {R}_{2}}^{2} , {| {h}_{{R}_{2} D} |}^{2} {σ}_{{R}_{2} D}^{2}\right\}}{{| {h}_{{R}_{2} D} |}^{2} {σ}_{{R}_{2} D}^{2}} ,$
Method 2, the channel fading matrix varies relatively faster, then the power control factors *p*₁ and *p*₂ are: ${p}_{1} = \frac{min \left\{{d}_{S {R}_{1} , min} {σ}_{S {R}_{1}}^{2} , {σ}_{{R}_{1} D}^{2}\right\}}{{σ}_{{R}_{1} D}^{2}} and {p}_{2} = \frac{min \left\{{d}_{S {R}_{2} , min} {σ}_{S {R}_{2}}^{2} , {σ}_{{R}_{2} D}^{2}\right\}}{{σ}_{{R}_{2} D}^{2}} ,$ wherein the calculation formula of the Euclidean distance *d*_{*SRᵢ*,min} is: ${d}_{SR , min} = {min}_{\begin{matrix}x \left(t\right) \neq x ' \left(t\right) \\ x \left(t\right) ∈ {C}^{{N}_{S}} , x ' \left(t\right) ∈ {C}^{{N}_{S}}\end{matrix}} {\sum }_{i = 1}^{{N}_{S}} {‖ {h}_{{S}_{i} {R}_{j}} {θ}_{i} \left({x}_{i} \left(t\right) - {x}_{i}^{'} \left(t\right)\right) ‖}^{2} = {min}_{\begin{matrix}x \left(t\right) \neq x ' \left(t\right) \\ x \left(t\right) ∈ {C}^{{N}_{S}} , x ' \left(t\right) ∈ {C}^{{N}_{S}}\end{matrix}} {\sum }_{i = 1}^{{N}_{S}} {‖ {h}_{{S}_{i} {R}_{j}} {θ}_{i} \left({x}_{i} \left(t\right) - {x}_{i}^{'} \left(t\right)\right) ‖}^{2}$

In the distributed orthogonal network space-time coding method, the compressed data distributed space-time coding is that the relay nodes R₁ and R₂ perform transmission according to the orthogonal space-time coding matrix, using respective compressed data ***x***_{*R*₁}(0), ***x***_{*R*₁}(1), ***x***_{*R*₂}(0) and ***x***_{*R*₂}(1), and the power control factors *p*₁ and *p*₂, viz, the relay node R₁ transmits signals $\sqrt{{p}_{1}} {x}_{{R}_{1}} \left(0\right)$ and $- \sqrt{{p}_{1}} {\left({x}_{{R}_{1}} \left(1\right)\right)}^{*}$ in the *T_{S}* = 4 th symbol period and the *T_{S}* + 1 = 5 th symbol period, respectively, and the relay node R₂ transmits signals $\sqrt{{p}_{2}} {x}_{{R}_{2}} \left(1\right)$ and $\sqrt{{p}_{2}} {\left({x}_{{R}_{2}} \left(0\right)\right)}^{*}$ in the *T_{S}* = 4 th symbol period and the *T_{S}* + 1 = 5 th symbol period, respectively. According to the signals transmitted by the relay nodes R₁ and R₂ in the *T_{S}* = 4 th symbol period and the *T_{S}* + 1 = 5 th symbol period, the following 2×2 distributed space-time coding matrix can be formed: $\left[\begin{matrix}\sqrt{{p}_{1}} {x}_{{R}_{1}} \left(0\right) & \sqrt{{p}_{2}} {x}_{{R}_{2}} \left(1\right) \\ - \sqrt{{p}_{1}} {x}_{{R}_{1}}^{*} \left(1\right) & \sqrt{{p}_{2}} {x}_{{R}_{2}}^{*} \left(0\right)\end{matrix}\right] = \left[\begin{matrix}\sqrt{{p}_{1}} {P}_{3} {\hat{x}}_{1,1} & \sqrt{{p}_{2}} {P}_{3} {\hat{x}}_{2,2} \\ - \sqrt{{p}_{1}} {\left({P}_{3} {\hat{x}}_{1,2}\right)}^{*} & \sqrt{{p}_{2}} {\left({P}_{3} {\hat{x}}_{2,1}\right)}^{*}\end{matrix}\right] .$

In this example, the estimation signals of the relay nodes in *T_{S}* = 4 symbol periods are subjected to network space-time coding by two groups of different vectors, respectively, and are cooperatively transmitted within two symbol periods, and the throughput can reach *T*_{S}/(*T_{S}* + 2) = 2/3 symbols/user/time slot.

In this example, the selected $1 \times \frac{{T}_{S} {N}_{S}}{2} = 1 \times 2 {N}_{S}$ -dimensional unit complex row vector ***P***₃ is: ${P}_{3} = \frac{1}{\sqrt{4 {N}_{s}}} \left[\begin{matrix}1 & exp \left(j 3 \times 2 π / \left(4 {N}_{s}\right)\right) & ⋯ & exp \left(j 3 \times 2 π \left(2 {N}_{s} - 1\right) / \left(4 {N}_{s}\right)\right)\end{matrix}\right] .$

Fig. 10 shows a simulation curve of the present example when the BPSK modulation is employed, wherein the ordinate is symbol error rate, and the abscissa is signal-to-noise ratio of each symbol. In the figure, (2,2,1) indicates that there are two source nodes, two relay nodes and one target node, each node has one antenna, and the throughput is 2/3 symbols/user/symbol period. It can be seen from Fig. 5 that, in the case where the throughputs are the same, the distributed orthogonal network space-time coding based on the power control algorithm 1 can obtain better performance, and has certain diversity gains.

The above solution can be applied to multipoint cooperative transmission. Thus, the source node can be a mobile terminal, the relay node can be a cooperative base station of a non-primary cell in the multipoint cooperative transmission, and the target node can be a main base station in the multipoint cooperative transmission.

In addition, the present invention can be carried out without modification to the system architecture and the current processing flow, which can be realized easily, is easy to promote in the technical field, and has strong industrial applicability.

The descriptions above are only preferable embodiments of the present invention, which are not used to restrict the scope of protection of the present invention as defined by the appended claims.

## Claims

1. An orthogonal network space-time coding method, which is used in a wireless communication network comprising a target node (D), a source node (S₁; S_{Ns}) and a relay node (R), comprising:
Step A, the source node (S₁; S_{Ns}) broadcasting data information to the relay node and the target node, the Step A requiring *T_{SR}* symbol periods; and
Step B, the relay node (R) performing, after receiving the data information transmitted by the source node, orthogonal network space-time coding, and transmitting the coding data to the target node (D), with Step B requiring 2 symbol periods,
**characterized in that** Step B comprises a process of relay node (R) decoding, a process of estimation information grouping, a process of estimation information compression, a process of compressed data space-time coding and a process of space-time transmission, wherein
the process of relay node (R) decoding is: the relay node performs maximum likelihood decoding, according to the received signal, to obtain estimation information of signal vectors transmitted by *N_{S}* source nodes (S₁; S_{Ns}), the number of which is corresponding to the number *N_{S}* of the source nodes;
the process of estimation information grouping is: a relay node R divides the estimation information of the signal vectors transmitted by all the *N_{S}* source nodes from the 0^{th} symbol period to the *T_{SR}* - 1 th symbol period, into two $\frac{{T}_{SR} {N}_{S}}{2} \times 1$ -dimensional column vectors;
the process of estimation information compression is: the two $\frac{{T}_{SR} {N}_{S}}{2} \times 1$ -dimensional column vectors obtained in the process of estimation information grouping are respectively compressed into two complex signals *x*_{*R*₁} and *x*_{*R*₂};
the process of compressed data space-time coding is: the two complex signals *x*_{*R*₁} and *x*_{*R*₂} obtained in the process of estimation information compression constitute a 2×2 matrix; and
the process of space-time transmission is: the 2×2 matrix is transmitted respectively by two antennas of the relay node, within two symbol periods.

2. The method according to Claim 1, **characterized in that** the process of estimation information grouping is as follows:
a first vector **x̂**₁ comprises estimation information, which is estimated by the relay node, of the signal vectors transmitted by the Ns source nodes from the 0^{th} symbol period to the $\frac{{T}_{SR}}{2} - 1 th$ symbol period; and
a second vector **x̂**₂ comprising estimation information, which is estimated by the relay node, of the signal vectors transmitted by the Ns source nodes from the $\frac{{T}_{SR}}{2} th$ symbol period to the *T_{SR} -* 1 th symbol period.

3. The method according to Claim 2, **characterized in that** the process of estimation information compression is as follows:
the vectors **x̂**₁ and **x̂**₂ obtained in the process of estimation information grouping is left multiplied by an unit complex row vector **P***ⱼ* of a network coding weight value with the $1 \times \frac{{T}_{SR} {N}_{S}}{2}$ -dimensional, respectively, to obtain the compressed complex signals *x*_{*R*₁} and *x*_{*R*₂}.

4. The method according to Claim 3, **characterized in that** the 2×2 matrix generated in the process of compressed data space-time coding is: the element at the first row and the first column is the compressed complex signal *x*_{*R*₁}, the element at the first row and the second column is the compressed complex signal *x*_{*R*₂}*,* the element at the second row and the first column is negative conjugation of the compressed complex signal *x*_{*R*₂}, and the element at the second row and the second column is conjugation of the compressed complex signal *x*_{*R*₁}.

5. The method according to Claim 4, **characterized in that** in the process of space-time transmission, the relay node transmits the two signals in the first row in the 2×2 matrix to the target node through the two antennas of the relay node in the *T_{SR}* th symbol period, and transmits the two signals in the second row in the 2×2 matrix to the target node through the two antennas of the relay node in the *T_{SR}* + 1 th symbol period.

6. The method according to any one of Claims 1-5, **characterized in that** the source node (S₁; S_{Ns}) is a mobile terminal, the relay node (R) is a cooperative base station of a non-primary cell in a multipoint cooperative transmission, and the target node is a main base station in the multipoint cooperative transmission.

7. An orthogonal network space-time coding relay transmission system based on the orthogonal network space-time coding method according to any one of claims 1-7, which comprises a target node (D), a plurality of source nodes (S₁; S_{Ns}) and a relay node (R), wherein:
the source node (S₁; S_{Ns}) is adapted to broadcast data information to the relay node (R) and the target node (D) in *T_{SR}* symbol periods; and
the relay node (R) is adapted to perform orthogonal network space-time coding on the received data information, and transmit the coding data to the target node, wherein the relay node accomplishes within 2 symbol periods five processes comprising a process of relay node decoding, a process of estimation information grouping, a process of estimation information compression, a process of compressed data space-time coding and a process of space-time transmission, **characterized in that**:
the process of relay node decoding is: the relay node (R) performs maximum likelihood decoding, according to the received signal, to obtain estimation information of signal vectors transmitted by *N_{S}* source nodes (S₁; S_{Ns}), the number of which is corresponding to the number *N_{S}* of the source nodes;
the process of estimation information grouping is: a relay node R divides the estimation information of the signal vectors transmitted by all the Ns source nodes from the 0^{th} symbol period to the *T_{SR}* - 1 th symbol period, into two $\frac{{T}_{SR} {N}_{S}}{2} \times 1$ -dimensional column vectors;
the process of estimation information compression is: the two $\frac{{T}_{SR} {N}_{S}}{2} \times 1$ -dimensional column vectors obtained in the process of estimation information grouping are respectively compressed into two complex signals *x*_{*R*₁} and *x*_{*R*₂};
the process of compressed data space-time coding is: the two complex signals *x*_{*R*₁} and *x*_{*R*₂} obtained in the process of estimation information compression constitute a 2×2 matrix; and
the process of space-time transmission is: the 2×2 matrix is transmitted respectively by two antennas of the relay node within two symbol periods.

## Patentansprüche

1. Raum-Zeit-Codierverfahren in einem orthogonalen Netz, das in einem drahtlosen Kommunikationsnetz verwendet wird, das einen Zielknoten (D), einen Quellknoten (S₁; S_{Ns}) und einen Relaisknoten (R) umfasst, umfassend:
Schritt A, Rundsenden, durch den Quellknoten (S₁; S_{Ns}), von Dateninformationen an den Relaisknoten und den Zielknoten, wobei der Schritt A *T_{SR}* Symbolperioden benötigt; und
Schritt B, nach Empfangen der vom Quellknoten übertragenen Dateninformationen, Vornehmen, durch den Relaisknoten (R), von Raum-Zeit-Codierung in einem orthogonalen Netz und Übertragen der Codierungsdaten an den Zielknoten (D), wobei Schritt B 2 Symbolperioden benötigt,
**dadurch gekennzeichnet, dass** Schritt B einen Relaisknoten- (R) Decodierprozess, einen Schätzungsinformationen-Gruppierprozess, einen Schätzungsinformationen-Komprimierprozess, einen Raum-Zeit-Codierprozess von komprimierten Daten, und einen Raum-Zeit-Übertragungsprozess umfasst, wobei
der Relaisknoten- (R) Decodierprozess lautet: der Relaisknoten nimmt gemäß dem empfangenen Signal Maximalwahrscheinlichkeitsdecodierung vor, um Schätzungsinformationen von von *N_{S}* Quellknoten (S₁; S_{Ns}) übertragenen Signalvektoren zu erhalten, deren Anzahl der Anzahl *N_{S}* der Quellknoten entspricht;
der Schätzungsinformationen-Gruppierprozess lautet: ein Relaisknoten R dividiert die Schätzungsinformationen der von allen den *N_{S}* Quellknoten von der 0. Symbolperiode bis zur *T_{SR}*-1*.* Symbolperiode übertragenen Signalvektoren in zwei $\frac{{T}_{SR} {N}_{S}}{2} \times 1$ -dimensionale Spaltenvektoren;
der Schätzungsinformationen-Komprimierprozess lautet: die zwei im Schätzungsinformationen-Gruppierprozess erhaltenen $\frac{{T}_{SR} {N}_{S}}{2} \times 1$ -dimensionalen Spaltenvektoren werden jeweils in zwei komplexe Signale *x*_{*R*₁}und *x*_{*R*₂} komprimiert;
der Raum-Zeit-Codierprozess von komprimierten Daten lautet: die zwei im Schätzungsinformationen-Komprimierprozess erhaltenen komplexen Signale *x*_{*R*₁} und *x*_{*R*₂} bauen eine 2x2-Matrix auf; und
der Raum-Zeit-Übertragungsprozess lautet: die 2x2-Matrix wird jeweils von zwei Antennen des Relaisknotens innerhalb von zwei Symbolperioden übertragen.

2. Verfahren gemäß Anspruch 1, **dadurch gekennzeichnet, dass** der Schätzungsinformationen-Gruppierprozess wie folgt lautet:
ein erster Vektor **x̂**₁ umfasst vom Relaisknoten geschätzte Schätzungsinformationen der von den Ns Quellknoten von der 0. Symbolperiode bis zur $\frac{{T}_{SR}}{2} - 1.$ Symbolperiode übertragenen Signalvektoren; und
wobei ein zweiter Vektor **x̂**₂ vom Relaisknoten geschätzte Schätzungsinformationen der von den Ns Quellknoten von der $\frac{{T}_{SR}}{2} .$ Symbolperiode bis zur *T_{SR}*-1. Symbolperiode übertragenen Signalvektoren umfasst.

3. Verfahren gemäß Anspruch 2, **dadurch gekennzeichnet, dass** der Schätzungsinformationen-Komprimierprozess wie folgt lautet:
die im Schätzungsinformationen-Gruppierprozess erhaltenen Vektoren **x̂**₁ und **x̂**₂ werden mit einem Einheitskomplex-Zeilenvektor P*ⱼ* eines Netzcodierungs-Gewichtungswerts mit jeweils der $1 \times \frac{{T}_{SR} {N}_{S}}{2}$ -Dimensionalen multipliziert gelassen, um die komprimierten komplexen Signale *x*_{*R*₁} und *x*_{*R*₂} zu erhalten.

4. Verfahren gemäß Anspruch 3, **dadurch gekennzeichnet, dass** die im Raum-Zeit-Codierprozess von komprimierten Daten erzeugte 2x2-Matrix lautet: das Element an der ersten Zeile und der ersten Spalte ist das komprimierte komplexe Signal *x*_{*R*₁}, das Element an der ersten Zeile und der zweiten Spalte ist das komprimierte komplexe Signal *x*_{*R*₂}, das Element an der zweiten Zeile und der ersten Spalte ist negative Konjugation des komprimierten komplexen Signals *x*_{*R*₂}, und das Element an der zweiten Zeile und der zweiten Spalte ist Konjugation des komprimierten komplexen Signals *x*_{*R*₁}.

5. Verfahren gemäß Anspruch 4, **dadurch gekennzeichnet, dass** im Raum-Zeit-Übertragungsprozess der Relaisknoten die zwei Signale in der ersten Zeile in der 2x2-Matrix in der *T_{SR}.* Symbolperiode über die zwei Antennen des Relaisknotens an den Zielknoten überträgt, und die zwei Signale in der zweiten Zeile in der 2x2-Matrix in der *T_{SR}*+1*.* Symbolperiode über die zwei Antennen des Relaisknotens an den Zielknoten überträgt.

6. Verfahren gemäß einem der Ansprüche 1-5, **dadurch gekennzeichnet, dass** der Quellknoten (S₁; S_{Ns}) ein mobiles Endgerät ist, der Relaisknoten (R) eine kooperative Basisstation einer nicht primären Zelle in einer kooperativen Multipoint-Übertragung ist, und der Zielknoten eine Hauptbasisstation in der kooperativen Multipoint-Übertragung ist.

7. Raum-Zeit-Codier-/Relaisübertragungssystem in einem orthogonalen Netz, das auf dem Raum-Zeit-Codierverfahren in einem orthogonalen Netz gemäß einem der Ansprüche 1-7 basiert, welches einen Zielknoten (D), eine Vielzahl von Quellknoten (S₁; S_{Ns}) und einen Relaisknoten (R) umfasst, wobei:
der Quellknoten (S₁; S_{Ns}) dazu ausgebildet ist, Dateninformationen an den Relaisknoten (R) und den Zielknoten (D) in *T_{SR}* Symbolperioden rundzusenden; und
der Relaisknoten (R) dazu ausgebildet ist, Raum-Zeit-Codierung in einem orthogonalen Netz an den empfangenen Dateninformationen vorzunehmen und die Codierungsdaten an den Zielknoten zu übertragen, wobei der Relaisknoten innerhalb von 2 Symbolperioden fünf Prozesse vollzieht, die einen Relaisknoten-Decodierprozess, einen Schätzungsinformationen-Gruppierprozess, einen Schätzungsinformationen-Komprimierprozess, einen Raum-Zeit-Codierprozess von komprimierten Daten, und einen Raum-Zeit-Übertragungsprozess umfassen,
**dadurch gekennzeichnet, dass**:
der Relaisknoten-Decodierprozess lautet: der Relaisknoten (R) nimmt gemäß dem empfangenen Signal Maximalwahrscheinlichkeitsdecodierung vor, um Schätzungsinformationen von von *N_{S}* Quellknoten (S₁; S_{Ns}) übertragenen Signalvektoren zu erhalten, deren Anzahl der Anzahl *N_{S}* der Quellknoten entspricht;
der Schätzungsinformationen-Gruppierprozess lautet: ein Relaisknoten R dividiert die Schätzungsinformationen der von allen den *N_{S}* Quellknoten von der 0. Symbolperiode bis zur *T_{SR}*-1. Symbolperiode übertragenen Signalvektoren in zwei $\frac{{T}_{SR} {N}_{S}}{2} \times 1$ -dimensionale Spaltenvektoren;
der Schätzungsinformationen-Komprimierprozess lautet: die zwei im Schätzungsinformationen-Gruppierprozess erhaltenen $\frac{{T}_{SR} {N}_{S}}{2} \times 1$ -dimensionalen Spaltenvektoren werden jeweils in zwei komplexe Signale *x*_{*R*₁} und *x*_{*R*₂} komprimiert;
der Raum-Zeit-Codierprozess von komprimierten Daten lautet: die zwei im Schätzungsinformationen-Komprimierprozess erhaltenen komplexen Signale *x*_{*R*₁} und *x*_{*R*₂} bauen eine 2x2-Matrix auf; und
der Raum-Zeit-Übertragungsprozess lautet: die 2x2-Matrix wird jeweils von zwei Antennen des Relaisknotens innerhalb von zwei Symbolperioden übertragen.

## Revendications

1. Procédé de codage d'espace-temps dans un réseau orthogonal, qui est utilisé dans un réseau de communication sans fil comprenant un noeud destination (D), un noeud source (S₁ ; S_{Ns}) et un noeud relais (R), comprenant :
étape A, la diffusion, par le noeud source (S₁ ; S_{Ns}), d'informations de données au noeud relais et au noeud destination, l'étape A nécessitant *T_{SR}* périodes de symbole ; et
étape B, la réalisation, après la réception des informations de données transmises par le noeud source, d'un codage d'espace-temps dans un réseau orthogonal, et la transmission, par le noeud relais (R), des données de codage au noeud destination (D), avec l'étape B nécessitant 2 périodes de symbole,
**caractérisé en ce que** l'étape B comprend un processus de décodage de noeud relais (R), un processus de groupement d'informations d'estimation, un processus processus de codage d'espace-temps de données compressées et un processus de transmission d'espace-temps, dans lequel
le processus de décodage de noeud relais (R) est : le noeud relais réalise un décodage de vraisemblance maximale, selon le signal reçu, pour obtenir des informations d'estimation de vecteurs de signaux transmises par *N_{S}* noeuds source (S₁ ; S_{Ns}) dont le nombre correspondant au nombre *N_{S}* des noeuds source ;
le processus de groupement d'informations d'estimation est : un noeud relais R divise les informations d'estimation des vecteurs de signaux transmises par tous les *N_{S}* noeuds source de la 0^{ème} période de symbole à la *T_{SR}*-1^{ème} période de symbole, en deux vecteurs de colonne de dimension $\frac{{T}_{SR} {N}_{S}}{2} \times 1 ;$
le processus de compression d'informations d'estimation est : les deux vecteurs de colonne de dimension $\frac{{T}_{SR} {N}_{S}}{2} \times 1$ obtenus dans le processus de groupement d'informations d'estimation sont respectivement compressés en deux signaux complexes *x*_{*R*₁} et *x*_{*R*₂} ;
le processus de codage d'espace-temps de données compressées est : les deux signaux complexes *x*_{*R*₁} et *x*_{*R*₂} obtenus dans le processus de compression d'informations d'estimation constituent une matrice 2 x 2 ; et
le processus de transmission d'espace-temps est : la matrice 2 x 2 est transmise respectivement par deux antennes du noeud relais, au cours de deux périodes de symbole.

2. Procédé selon la revendication 1, **caractérisé en ce que** le processus de groupement d'informations d'estimation est comme suit :
un premier vecteur **x̂**₁ comprend des informations d'estimation, qui sont estimées par le noeud relais, des vecteurs de signaux transmis par les Ns noeuds source de la 0^{ème} période de symbole à la $\frac{{T}_{SR}}{2} - {1}^{ème}$ période de symbole ; et
un second vecteur **x̂**₂ comprenant des informations d'estimation, qui sont estimées par le noeud relais, des vecteurs de signaux transmis par les Ns noeuds source de la $\begin{matrix}{T}_{SR} \\ 2\end{matrix} ème$ période de symbole à la *T_{SR}*-1^{ème} période de symbole.

3. Procédé selon la revendication 2, **caractérisé en ce que** le processus de compression d'informations d'estimation est comme suit :
les vecteurs **x̂**₁ et **x̂₂** obtenus dans le processus de groupement d'informations d'estimation sont respectivement multipliés à gauche par un vecteur de ligne complexe unitaire Pⱼ d'une valeur de pondération de codage de réseau avec le vecteur de colonne de dimension $1 \times \frac{{T}_{SR} {N}_{S}}{2}$ pour obtenir les signaux complexes compressés *x*_{*R*₁} et *x*_{*R*₂}*.*

4. Procédé selon la revendication 3, **caractérisé en ce que** la matrice 2 x 2 générée dans le processus de codage d'espace-temps de données compressées est : l'élément au niveau de la première ligne et de la première colonne est le signal complexe compressé *x*_{*R*₁}, l'élément au niveau de la première ligne et de la seconde colonne est le signal complexe compressé *x*_{*R*₂}, l'élément au niveau de la seconde ligne et de la première colonne est un conjugué négatif du signal complexe compressé *x*_{*R*₂} et l'élément au niveau de la seconde ligne et de la seconde colonne est un conjugué du signal complexe compressé *x*_{*R*₁}.

5. Procédé selon la revendication 4, **caractérisé en ce que**, dans le processus de transmission d'espace-temps, le noeud relais transmet les deux signaux dans la première ligne dans la matrice 2 x 2 au noeud destination par le biais des deux antennes du noeud relais dans la *T_{SR}*^{ème} période de symbole, et transmet les deux signaux dans la seconde ligne dans la matrice 2 x 2 au noeud destination par le biais des deux antennes du noeud relais dans la *T_{SR}*+1^{ème} période de symbole.

6. Procédé selon l'une quelconque des revendications 1 à 5, **caractérisé en ce que** le noeud source (S₁ ; S_{Ns}) est un terminal mobile, le noeud relais (R) est une station de base coopérative d'une cellule non primaire dans une transmission coopérative multipoint, et le noeud destination est une station de base principale dans la transmission coopérative multipoint.

7. Système de transmission de relais de codage d'espace-temps dans un réseau orthogonal sur la base du procédé de codage d'espace-temps dans un réseau orthogonal selon l'une quelconque des revendications 1 à 7, qui comprend un noeud destination (D), une pluralité de noeuds source (S₁ ; S_{Ns}) et un noeud relais (R), dans lequel :
le noeud source (S₁ ; S_{Ns}) est adapté pour diffuser des informations de données au noeud relais (R) et au noeud destination (D) dans *T_{SR}* périodes de symbole ; et
le noeud relais (R) est adapté pour réaliser un codage d'espace-temps dans un réseau orthogonal sur les informations de données reçues, et transmettre les données de codage au noeud destination, dans lequel le noeud relais accomplit au cours de 2 périodes de symbole cinq processus comprenant un processus de décodage de noeud relais, un processus de groupement d'informations d'estimation, un processus de compression d'informations d'estimation, un processus de codage d'espace-temps de données compressées et un processus de transmission d'espace-temps,
**caractérisé en ce que** :
le processus de décodage de noeud relais est : le noeud relais (R) réalise un décodage de vraisemblance maximale, selon le signal reçu, pour obtenir des informations d'estimation de vecteurs de signaux transmis par *N_{S}* noeuds source (S₁ ; S_{Ns}), dont le nombre correspondant au nombre *N_{S}* des noeuds source ;
le processus de groupement d'informations d'estimation est : un noeud relais R divise les informations d'estimation des vecteurs de signaux transmis par tous les Ns noeuds source de la 0^{ème} période de symbole à la *T_{SR}*-1^{ème} période de symbole, en deux vecteurs de colonne de dimension $\frac{{T}_{SR} {N}_{S}}{2} \times 1 ;$
le processus de compression d'informations d'estimation est : les deux vecteurs de colonne de dimension $\begin{matrix}{T}_{SR} {N}_{S} \\ 2\end{matrix} \times 1$ obtenus dans le processus de groupement d'informations d'estimation sont respectivement compressés en deux signaux complexes *x*_{*R*₁} et *x*_{*R*₂} ;
le processus de codage d'espace-temps de données compressées est : les deux signaux complexes *x*_{*R*₁} et *x*_{*R*₂} obtenus dans le processus de compression d'informations d'estimation constituent une matrice 2 x 2 ; et
le processus de transmission d'espace-temps est : la matrice 2 x 2 est transmise respectivement par deux antennes du noeud relais au cours de deux périodes de symbole.
